# EUROPEAN PATENT SPECIFICATION

(11) **EP 2 234 964 B1**
(45) Date of publication and mention of the grant of the patent: **04.05.2016**
(21) Application number: 08865615.2
(22) Date of filing: 18.12.2008
(51) Int. Cl.: C07C 251/14, C07C 251/20, C07D 403/08, C07D 403/10, C07D 413/08, C07D 413/10, C07D 417/08, C07D 417/10

(54) **INTERMEDIATE COMPOUNDS FOR THE PREPARATION OF MESO-SUBSTITUTED CYANINE, MEROCYANINE AND OXONOLE DYES.**
ZWISCHENPRODUKTE ZUR HERSTELLUNG VON MESOSUBSTITIUIERTEM CYANIN, MEROCYANIN UND OXONOLFARBSTOFFEN.
COMPOSES INTERMEDIAIRES POUR LA PREPARATION DE COLORANTS A BASE DE CYANINE, MEROCYANINE ET OXONOLE

(30) Priority: 20.12.2007 EP 07123764; 20.12.2007 US 8347
(43) Date of publication of application: 06.10.2010
(73) Proprietor: Agfa Graphics N.V., 2640 Mortsel (BE)
(72) Inventor: CALLANT, Paul, B-2640 Mortsel (BE); LOUWET, Jos, B-2640 Mortsel (BE)
(74) Representative: Goedeweeck, Rudi
(86) International application number: PCT/EP2008/067847
(87) International publication number: WO 2009/080689

(56) References cited:
- EP-A2- 0 738 707
- WO-A1-02/24815

## Description

### FIELD OF THE INVENTION

The present invention relates to new intermediate compounds according to Formula I. The invention relates also to a method of preparing cyanine, merocyanine or oxonole dyes from the new intermediate compounds.

### BACKGROUND OF THE INVENTION

Cyanine, merocyanine or oxonole dyes are well known in the art. They are for example widely used in various imaging systems, in recording media such as optical discs or in diagnostic tools. For more information about the application of these dyes, see for example "COLOR CHEMISTRY: synthesis, properties and applications of organic dyes and pigments", Heinrich Zollinger, VHCA & Wiley-VCH, third revised edition 2003.
Cyanine dyes are for example also used as infrared (IR) radiation absorbing dyes (IR-dyes) in lithographic printing plate precursors. These IR-dyes absorb IR radiation, used to imagewise expose the lithographic printing plate precursors, thereby triggering an imaging mechanism of the lithographic printing plate precursor, e.g. polymerization, coalescence of thermoplastic particles, solubilization or insolubilization, etc.

The preparation of cyanine dyes having a chloride atom as meso-substituent, for example according to the following formula wherein R represents a substituent and X renders the dye neutral, is well known in the art.

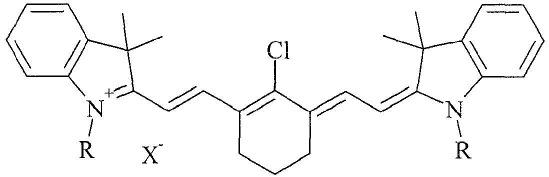

For example in WO2002/24815 the following reaction is disclosed to prepare such a meso-chloor cyanine dye.

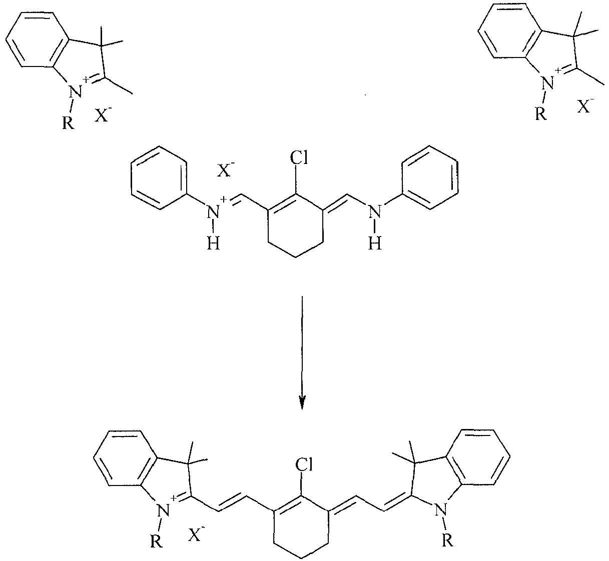

It may however be advantageous to introduce other substituents than chloride on the meso-position of a cyanine dye, for example to change the absorption characteristics, to improve the thermal or photostability, to change the solubility or to adjust the hydrophobicity/hydrophilicity of the cyanine dye.

Often, to prepare cyanine dyes with other meso-substituents than chloride, the corresponding meso-Cl cyanine dye is first prepared as intermediate dye, followed by an exchange of the chloride by the other substituent.

For example in WO2002/24815 cyanine dyes having as meso-substituent -O-Ar, -S-Ar, -NH-Ar or -NR-Ar, wherein Ar represents an arylgroup and R an alkyl group, are prepared from the corresponding meso-Cl cyanine dye.

EP-A 1 736 312 and WO2006/136543 disclose IR-dyes enabling the formation of a visible printout image upon imagewise exposure of lithographic printing plate precursors, comprising those IR-dyes, to IR radiation. The formation of a visible printout image is the result of a chemical transformation of specific substituents, preferably on the meso-position of the cyanine dyes, upon exposure to IR-radiation. Again, these IR-dyes are all prepared by first preparing the corresponding meso-Cl IR-dye, followed by an exchange of the chloride with one of the specific substituents, either through a single step or a multistep reaction sequence.

In WO2004/052995, an intermediate product according to the following formula, 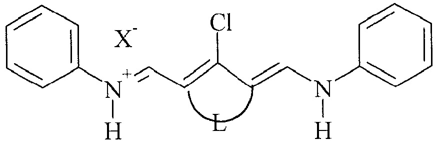 wherein L is for example a 5- or 6-membered ring and X renders the intermediate neutral, is used to obtain in a "one pot process" cyanine dyes having as meso-substituent -S-Ar; -Se-Ar; -O-Ar; -NR'-Ar, -SO₂-Ar or -(N-heterocycle), wherein Ar represents an aryl group and R' represents a hydrogen or an alkyl group. However, during this "one pot process" the corresponding meso-Cl cyanine dye is also formed first in situ, whereupon the chloride is replaced by the above mentioned substituents.

The necessity to first synthesize the meso-Cl dye followed by an exchange of the chloride by the required substituent is a disadvantage of these preparation methods. During the synthesis of a meso-Cl cyanine dye unwanted side reactions may take place, as for example described in Eur.J.Org.Chem., 2007, pages 3102-3114; Tetrahedron Letters, 48, 2007, pages 5137-5142 and Chem.Mater., 19, 2007, pages 5325-5335.

Another disadvantage of first synthesizing the meso-Cl dye is the fact that at least one additional reaction step is necessary and moreover, that the exchange of the chloride by the required substituent may be cumbersome, e.g. resulting in unwanted side reactions and/or intermediate products, depending on the nature of the required substituent and the other structural parts of the cyanine dye. An example of unwanted side-reactions that might occur during the exchange of a meso-Cl by another substituent is described in for example Dye and Pigments, 46, 2000, 163-168.

A further disadvantage of first synthesizing the meso-Cl dye is the fact that during the exchange of the chloride by the required substituent, chloride anions become available in the reaction medium, and may interfere in the reaction. When cationic cyanine dyes are prepared, the chloride anions may become an unwanted counter ion of the dye formed, or may compete with other, more preferred, counter ions. Since the type of counter ion may have an impact on the outcome of the dye formation reaction, for example by influencing the solubility of the cationic dye formed, it may be advantageous to avoid the presence of chloride anions during dye formation.

In EP 738 707, an intermediate according to the following formula 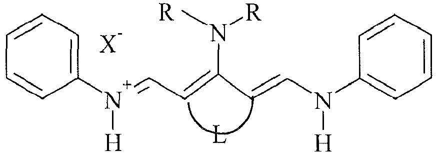 is used wherein R" and R"' are independently an alkyl or aryl group, L is for example a 5- or 6-membered ring and X⁻ renders the intermediate neutral. From this intermediate, a cyanine dye having as meso-substituent -NR" R"' is prepared in a single step. Using these intermediates no longer necessitates the preparation of a corresponding meso-Cl dye as intermediate dye. These intermediates are prepared by reacting an aniline compound, an orthoester and an iminium cation, said iminium cation according to the following formula, wherein R", R"' independently represent an alkyl or aryl group and L is for example a 5- or 6-membered ring and X renders the molecule neutral:

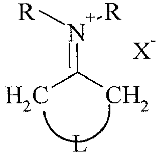

This reaction scheme is however not suitable to introduce substituents on the meso-position of a cyanine dye wherein R or R , instead of alkyl or aryl groups, are electron withdrawing groups because no stable iminium cation according to the formula mentioned above with such electron withdrawing groups can be formed. Therefore, this preparation method is for example not suitable to prepare, without going via the meso-Cl dye, the IR-dyes having the specific N-meso-substituents disclosed in EP-A 1 736 312 and WO2006/136543 described above.

EP-A 1 473 330 discloses a process for the synthesis of meso-substituted oxonole dyes wherein a α-ketomethylene compound is reacted with a pyridinium compound. This process however is only suitable to prepare "open chain" oxonole dyes. An analogue methodology is used to prepare "open chain" indolinine dyes in JP-A 2001/151752.

Introducing electron withdrawing groups on a N-meso-substituent of cyanine dyes may be of interest, as described in the above mentioned applications EP-A 1 736 312 and WO2006/136543, to realize IR cyanine dyes forming a visible printout image after IR-exposure. It may also be of interest to enable the introduction of connecting groups on the meso-position, making the cyanine dye more useful for example to label biomolecules. Moreover, it may also enable the introduction of substituents on the meso-position of cyanine dyes which, upon exposure to actinic light, undergo a chemical transformation thereby releasing functional ingredients. Such released functional ingredients may for example participate in the image formation of imaging systems: as initiator of a polymerization reaction in photopolymer printing plate precursors; as solubilization inhibitor or accelerator in printing plate precursors having an imaging mechanism based on an increased (positive working) or decreased (negative working) solubilization of an imaging layer in a developer after (IR) exposure; or as coalescence agent in printing plate precursors having as imaging mechanism the coalescence of thermoplastic particles upon exposure to IR radiation.

There is thus a need for a preparation method of N-meso substituted cyanine, merocyanine or oxonole dyes wherein the N-meso substituent comprises electron with drawings groups, without first preparing the corresponding meso-chloor dye.

### SUMMARY OF THE INVENTION

It is an object of the present invention to provide new intermediate compounds enabling the preparation of N-meso substituted cyanine, merocyanine or oxonole dyes wherein the N-meso substituent comprises electron withdrawing groups and wherein such N-meso substituents are introduced at the intermediate level. These intermediates enable the formation of dyes having in the meso-position N-substituents comprising electron withdrawing groups without the need for further derivatization of the meso-substitutent at the dye level. The method of preparation of the dyes provides high yields and a high level of purity of the end products and moreover offers an enhanced flexibility to prepare different dyes, i.e. cationic, anionic, zwitterionic, asymmetric or symmetric dyes, from the same intermediate without the need for further derivatization after chromophore formation, i.e. at the dye level. The method also offers the flexibility to select the counter ion of the dye to be formed at the intermediate level.

These objects are realized by the intermediate compounds as defined in independent claim 1 and the method of preparing the dyes as defined in independent claim 7. Other preferred embodiments of the invention are defined in the dependent claims.

### DETAILED DESCRIPTION OF THE INVENTION

The present invention relates to new intermediate compounds according to Formula I, 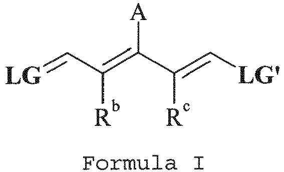 wherein
R^{b} and R^{c} independently represent a hydrogen atom or an optionally substituted alkyl group or represent the necessary atoms to form an optionally substituted ring structure;
LG and LG' independently represent a leaving group precursor as defined below;
A is selected from the list consisting of:
   - NR¹-CO-R²
   - NR¹-SO₂-R³
   - NR⁴-SO-R⁵
   - NR¹-PO-R⁶R⁷
wherein
R¹ represents a hydrogen atom, an optionally substituted alkyl group, a -SO₃⁻ group, a -COOR⁸ group or an optionally substituted (hetero)aryl group, or R¹ together with at least one of R⁹, R¹⁰ and R¹¹ comprise the necessary atoms to form a ring structure;
R² represents an optionally substituted alkyl or (hetero)aryl group, -OR⁹, -NR¹⁰ R¹¹ or CF₃;
R³ represents an optionally substituted alkyl group, an optionally substituted (hetero)aryl group, -OR⁹ -NR¹⁰R¹¹ or -CF₃;
R⁴ represents a hydrogen atom, an optionally substituted alkyl group or an optionally substituted (hetero)aryl group; R⁵ represents an optionally substituted alkyl group or an optionally substituted (hetero)aryl group;
R⁶ and R⁷ independently represent an optionally substituted alkyl group, an optionally substituted aryl group or -OR⁹;
R⁸ represents an optionally substituted aryl group or an optionally substituted alkyl group, preferably an optionally substituted alpha-branched alkyl group;
R⁹ represents is an optionally substituted (hetero)aryl group or an optionally substituted alkyl group, preferably an optionally substituted branched alkyl group;
R¹⁰ and R¹¹ independently represent a hydrogen atom, an optionally substituted alkyl group, an optionally substituted (hetero)aryl group or represent the necessary atoms to form a cyclic structure.

Preferably, the substituent A in Formula I is selected from the list consisting of:
- NR¹-CO-R²
- NR¹SO₂-R³
wherein R¹, R² and R³ have the same meaning as described above for Formula I.

More preferably, the substituent A in Formula I is selected from the list consisting of: 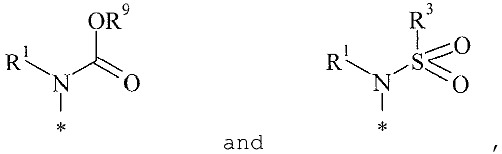 wherein
R¹ has the same meaning as described above for Formula I;
R⁹ represents an optionally susbstituted branched alkyl group; and
R³ represents -CF₃, an optionally substituted aryl group or -NR¹⁰R¹¹ wherein R¹⁰ and R¹¹ have the same meaning as described above for Formula I.

Particularly preferred, the substituent A in Formula I is selected form the list consisting of: 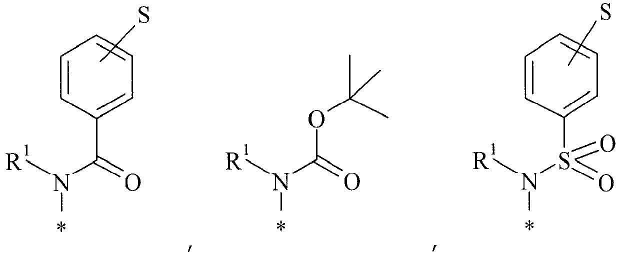 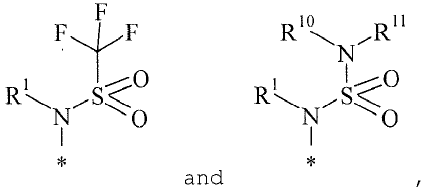 wherein R¹, R¹⁰ and R¹¹ have the same meaning as in Formula I and S represents one or more optional substituents.

The one or more optional substituents S are preferably and independently selected from an optionally substituted alkyl group, halogen, alkoxy, cyano and -CO₂R^{s} wherein R^{s} represent a hydrogen atom or an alkyl group.

The leaving group precursors LG and LG' are part of a group that is split off from the intermediate compound of Formula I during dye formation, as described in the second object of the invention.

The leaving group precursor LG is selected from the list consisting of: 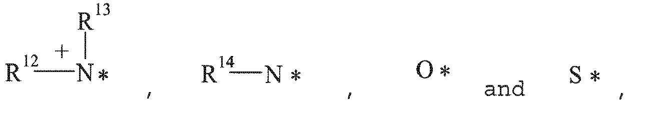 and the leaving group precursor LG' is selected from the list consisting of: 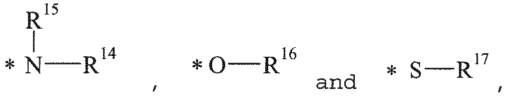 wherein
R¹², R¹³, R , R¹⁵, R and R independently represent a hydrogen atom, an optionally substituted alkyl group, an optionally substituted (hetero)aryl group or wherein R¹² and R¹³ or R¹⁴ and R¹⁵ represent the necessary atoms to form a cyclic structure,
* represents the linking position of LG and LG' in Formula I.

Preferably, the intermediate compounds have a structure according to Formulae II, IIIa, IIIb and IV, more preferably according to Formulae IIIa and IIIb. 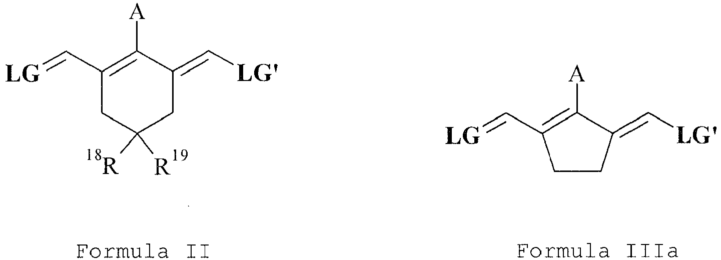 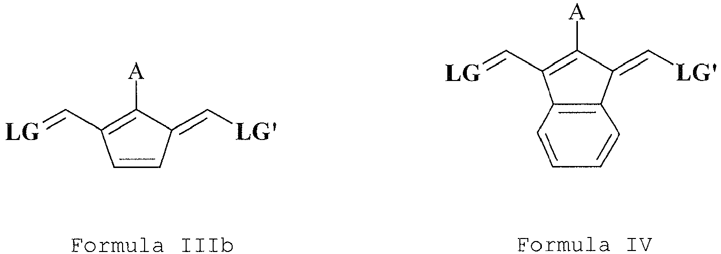 wherein
LG, LG' and A have the same meaning as in Formula I;
R¹⁸ and R¹⁹ independently represent a hydrogen atom, an optionally substituted alkyl group, an optionally substituted (hetero)aryl group, -CN, -COR²⁰ or -CO₂R²⁰ wherein R²⁰ represents a hydrogen atom or an alkyl group.

Highly preferred intermediates have a structure according to the following Formulae V to X: 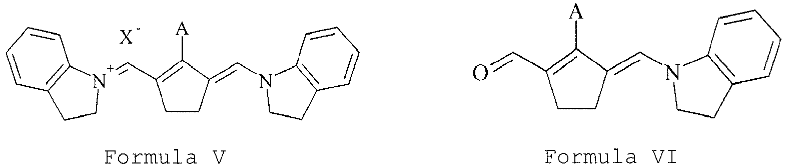 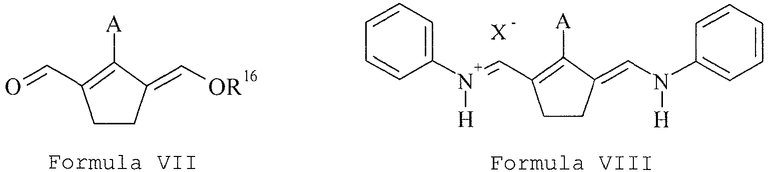 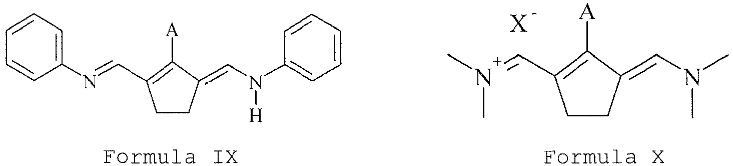 wherein
A has the same meaning as in Formula I;
X renders the compound neutral,
R¹⁶ has the same meaning as described above.

Particularly preferred intermediate compounds have a structure according to Formula XI: 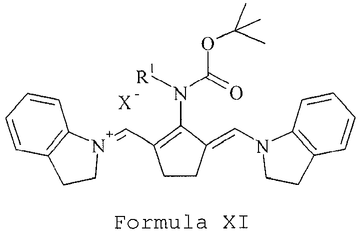 wherein R¹ has the same meaning as described above for Formula I and X renders the formula neutral.

X⁻ in Formulae V, VIII, X and XI renders the intermediate compound neutral. Preferably X⁻ represents a halide anion, i.e. Cl⁻, Br or I⁻; a sulfonate group anion, e.g. CH₃SO₃⁻ , CF₃SO₃⁻ , p-toluene sulfonate; a tetrafluoroborate or a hexafluorophosphate anion. Examples of intermediate compounds according to Formulae I to XI are given below.

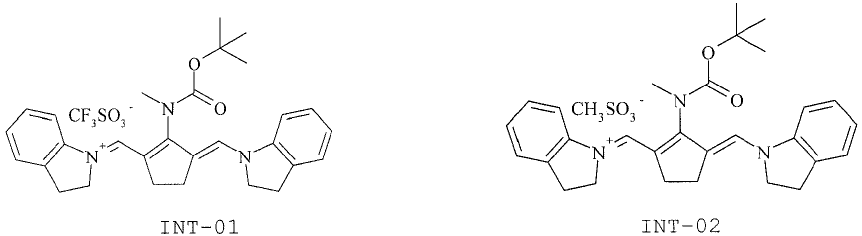

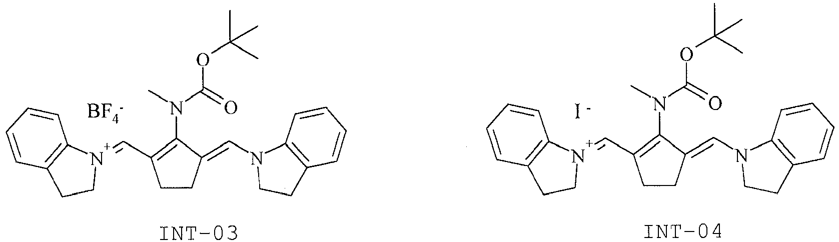

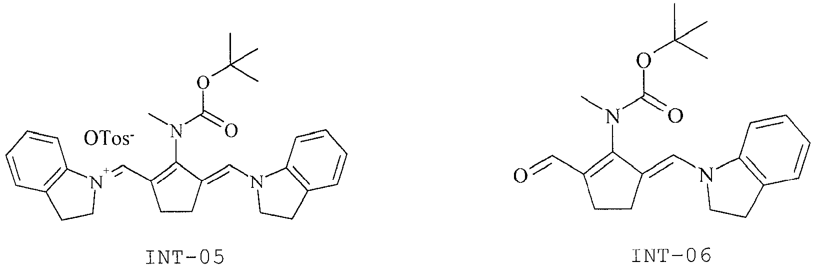

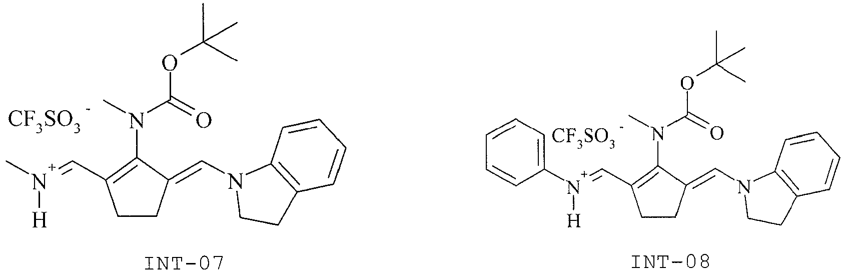

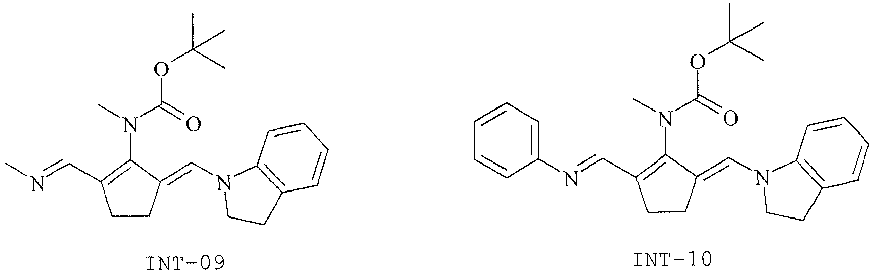

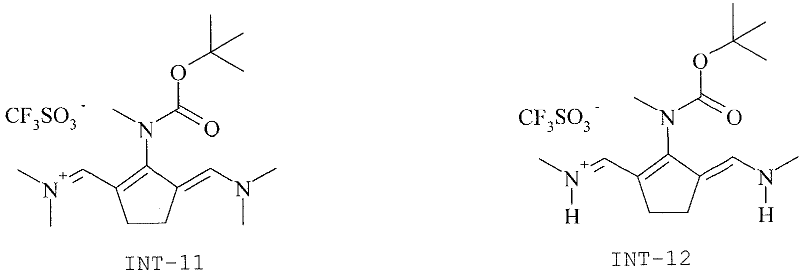

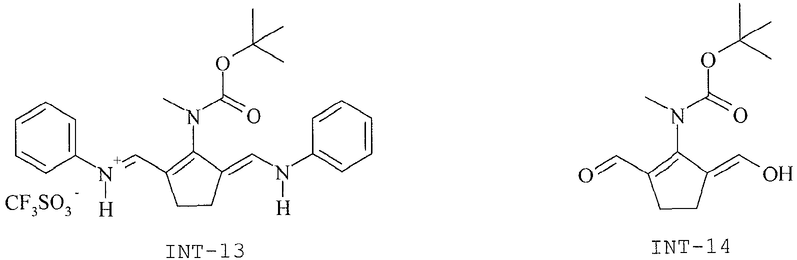

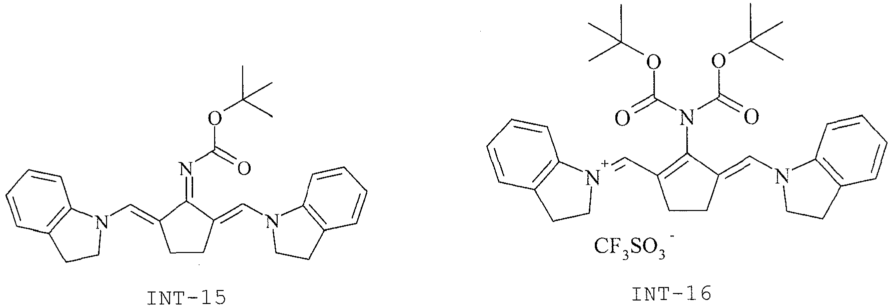

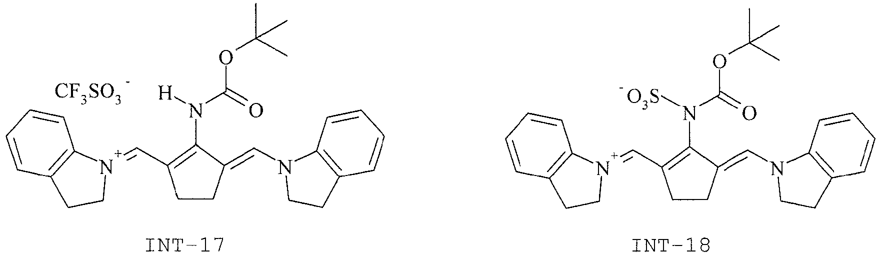

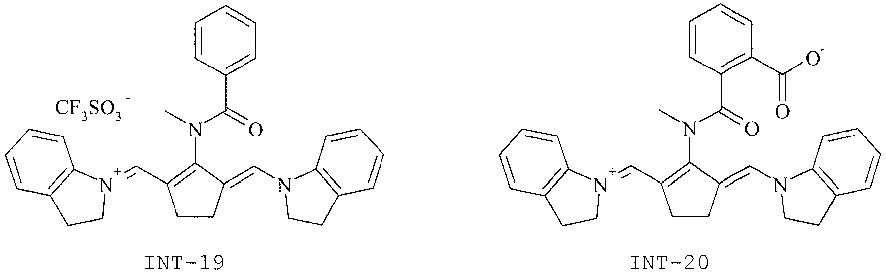

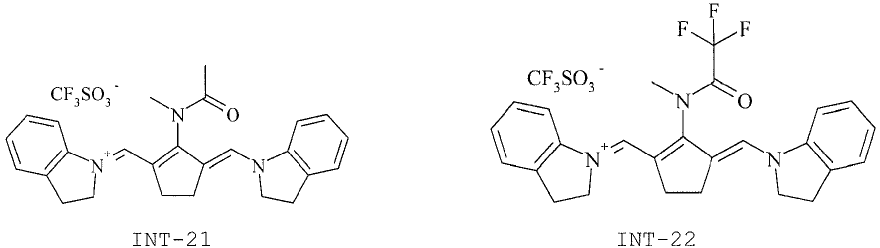

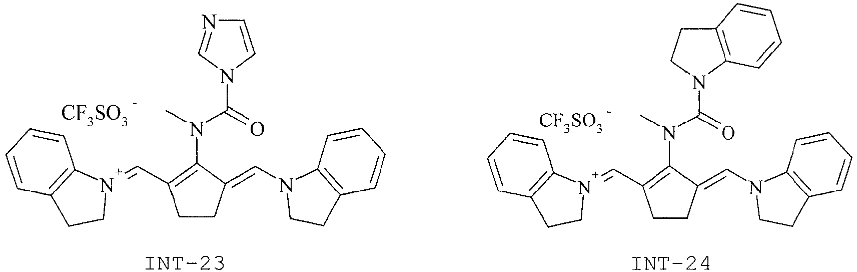

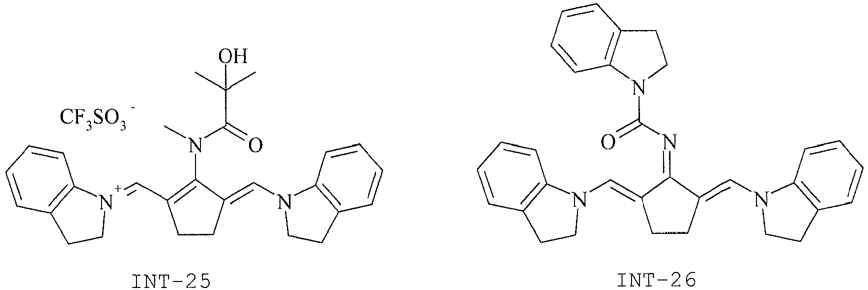

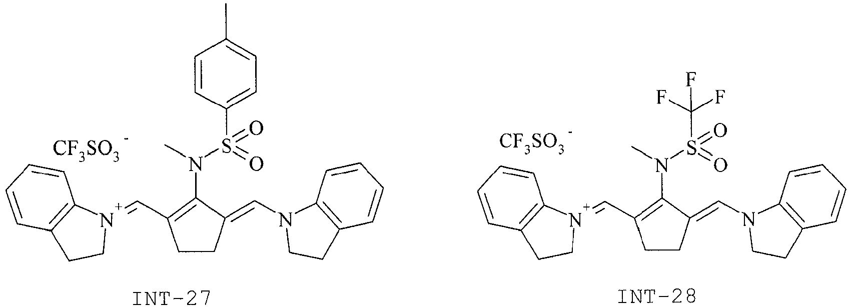

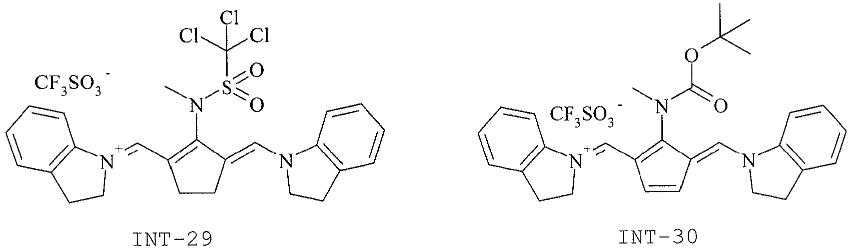

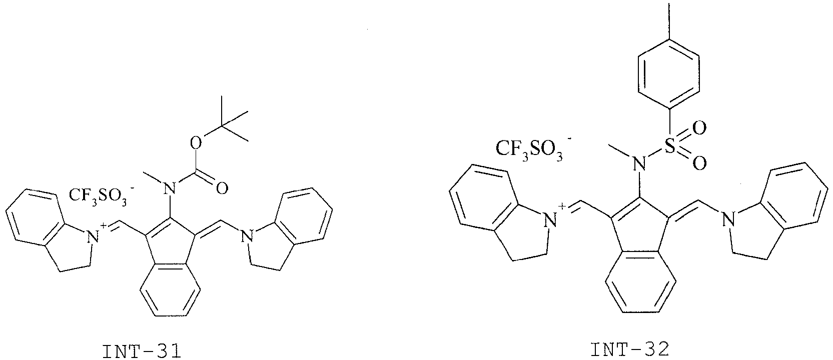

An embodiment of the second object of the present invention is realized by a method for making a cyanine dye according to Formula XII, 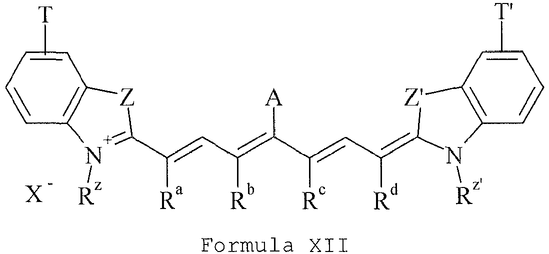 wherein
T and T' independently represent one or more substituents or an annulated ring;
Z and Z' independently represent -O-, -S-, -CR^{e}R^{f}- or -CH=CH- and wherein R^{e} and R^{f} independently represent an optionally substituted alkyl or aryl group;
R^{z} and R^{z'} independently represent an optionally substituted alkyl group;
R^{b} and R^{c} have the same meaning as in Formula I,
R^{a} and R^{d} independently represent a hydrogen atom or an optionally substituted alkyl group;
R^{z} and R^{a} or R^{d} and R^{z'} may represent the necessary atoms to form an optionally substituted 5- or 6-membered ring;
X renders the dye neutral;
characterized in that the group A is directly incorporated in the cyanine dye by the reaction of an intermediate compound according to Formula I with an indolium or azolium compound according to Formula XIII and an indolium or azolium compound according to Formula XIV, 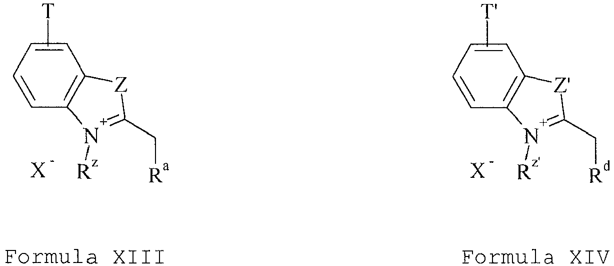 wherein
T, T', Z, Z , R^{z}, R^{z'}, R^{a}, R and X have the same meaning as in Formula XII.

The one or more substituents T and T' may be independently selected from halogen, an optionally substituted alkyl group, an optionally substituted (hetero)alkyl group, an alkoxy group, a cyano group, CO₂R^{t}, CF₃ and SO₂R^{t'} and wherein R represents a hydrogen atom or an optionally substituted alkyl group and R^{t'} respresents an optionally substituted alkyl or an optionally substituted (hetero)aryl group.

According to a preferred embodiment, a cyanine dye according to Formula XVa or Formula XVb, 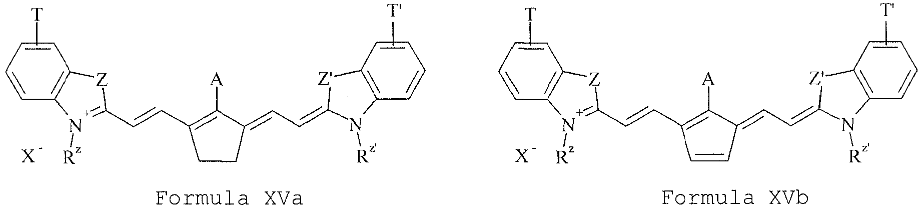 wherein
T, T', Z, Z', R^{z}, R^{z'}, A and X have the same meaning as in Formula XII, is prepared by the reaction of an intermediate compound according to Formula IIIa or IIIB with an indolium or azolium compound according to Formula XIII and an indolium or azolium compound according to Formula XIV.

In a highly preferred embodiment of the present invention a cyanine dye according to Formula XVI, 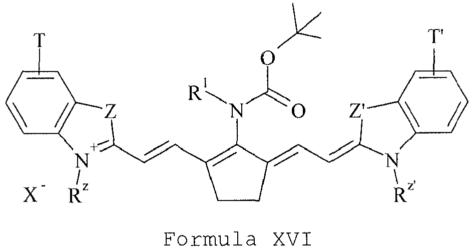 wherein
T, T', Z, Z', R^{z}, R^{z'} and X have the same meaning as in Formula XII and R¹ has the same meaning as in Formula I,
is prepared by the reaction of an intermediate compound according to Formula XI with an indolium or azolium compound according to Formula XIII and an indolium or azolium compound according to Formula XIV.

Typically, T, T', R^{z} and R^{z'} in Formula XIII and XIV will determine whether the resulting dye is anionic, cationic or zwitterionic. Whether a cationic, anionic or zwitterionic cyanine dye is preferred, may depend on the application in which the cyanine dye will be used, for example the solubility of the dye in aqueous or non-aqueous media. When T, T', R^{z} and R^{z'} are neutral substituents, the resulting cyanine dye according to Formulae XII, XVa, XVb or XVI will be cationic. By introducing anionic T, T', R^{z} or R^{z'} groups, zwitterionic or anionic dyes, depending on the number and netto negative charge of those substituents, may be formed. It is also clear, that the method of the present invention to prepare cyanine dyes according to Formulae XII, XVa, XVb or XVI offers an enhanced flexibility towards the preparation of different cyanine dyes, anionic, cationic or zwitterionic, from a single intermediate compound.

Anionic IR dyes are preferably prepared by the reaction of an intermediate compound according to the present invention described above with an indolium or azolium compound according to Formula XVIIIa and an indolium or azolium compound according to Formula XVIIIb, 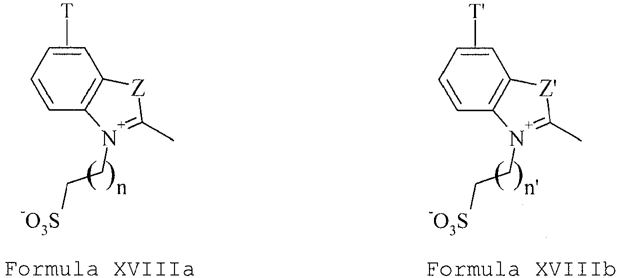 wherein
T, T', Z and Z' have the same meaning as in Formula XII;
n and n' independently represent an integer ranging from 1 to 3.

Anionic dyes may also be prepared by the reaction of an intermediate compound according to the present invention described above with an indolium or azolium compound according to Formula XVIIIc and an indolium or azolium compound according to Formua XVIIId, 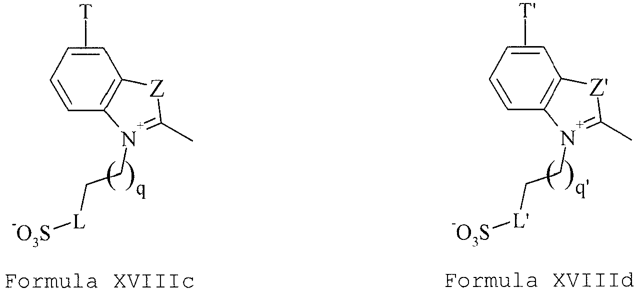 wherein
T, T', Z, Z' have the same meaning as in Formula XII;
L and L' represent O or S;
q and q' independently represent an integer ranging from 1 to 2.

Cationic dyes are preferably prepared by the reaction of an intermediate compound according to the present invention described above with an indolium or azolium compound according to Formula XIXa and an indolium or azolium compound according to Formula XIXb, 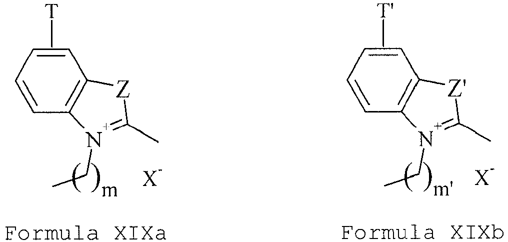
wherein T, T', Z and Z' have the same meaning as in Formula XII;
m and m' independently represent an integer ranging from 0 to 15.

The cyanine dyes according to Formulae XII, XVa, XVb and XVI obtained with the method described above, may be symmetric or asymmetric.

In a preferred embodiment, cyanine dyes according to Formulae XII, XVa, XVb and XVI are symmetric dyes wherein T = T', Z = Z', R^{z} = R^{z'}, R^{a} = R^{d} and R^{b} = R^{c}.
Symmetric dyes are obtained with the method of the present invention described above by reacting an intermediate compound according to Formula I, wherein R^{b} = R^{c} or more preferably wherein R^{b} and R^{c} form a 5- or 6-membered ring as in the intermediates according to Formulae II, IIIa, IIIb, IV or XI with an indolium or azolium compound according to Formulae XIII or XIV. For the synthesis of a symmetric dye according to Formulae XII, XVa, XVb or XVI, approximately two equivalents of one indolium or azolium compound according to Formulae XIII or XIV is used for one equivalent of an intermediate compound according to the present invention.

It is clear that the method of the present invention to prepare cyanine dyes according to Formula XII, offers an enhanced flexibility towards the preparation of different cyanine dyes, i.e. symmetric or asymmetric, from the same intermediate compound.

If the intermediate compounds are reacted with two different compounds according to Formula XIII and XIV, a mixture of symmetric and asymmetric dyes is obtained. To obtain a pure asymmetric dye, an intermediate compound according to Formula I is reacted with a first compound according to Formula XIII followed by the isolation of a resulting mono-condensed products according to Formula XVII. 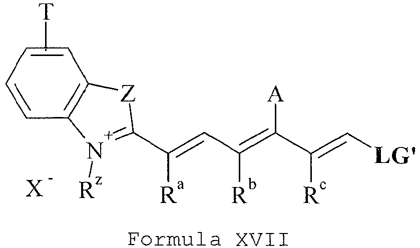 wherein A, T, T', R^{z}, R^{a}, R^{b}, R^{c}, LG' and X⁻ have the same meaning as in Formula XII.

Approximately one equivalent of the mono-condensed product according to Formula XVII is then further reacted with approximately one equivalent of a compound according to Formula XIV, different from the compound according to Formula XIII used to from the mono-condensed product, to obtain an asymmetric cyanine dye according to Formula XII.

In another embodiment of the second object of the invention a merocyanine according to Formula XX, 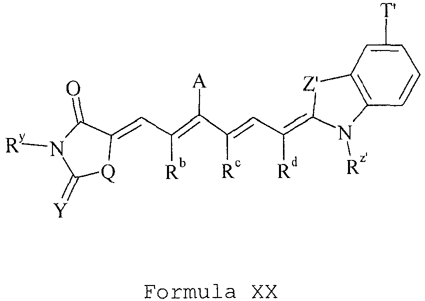 wherein
A, R^{b}, R^{c}, R^{d}, R^{z'} and T' have the same meaning as in Formula XII;
Y represents O, S or NR^{k};
Q represents O, S, NR^{k} or CONR^{l} and wherein R represents an optionally substituted alkyl, benzyl or phenyl group and R^{l} represents hydrogen, an optionally substituted alkyl or (hetero)aryl group;
R^{y} represents an optionally substituted alkyl or (hetero)aryl group,
is prepared by the reaction of an intermediate compound according to Formula I with a compound according to Formula XIII or XIV and a compound according to Formula XXI, 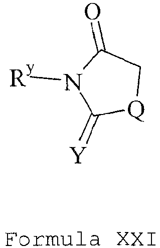 wherein Y, Q and R^{y} have the same meaning as in Formula XX.

In still another embodiment of the present invention a dye according to Formula XXII, 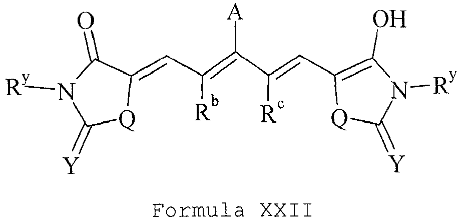 wherein
R^{y}, Q, Y, R^{b}, R^{c} have the same meaning as in Formula XX,
is prepared by the reaction of an intermediate compound according to Formula I with a compound according to Formula XXI.

The intermediates of the present invention may be used to prepare other dyes by varying the one or more compounds to be reacted with the intermediate compounds.

Examples of dyes that may be synthesized with the method according to present invention are given below.

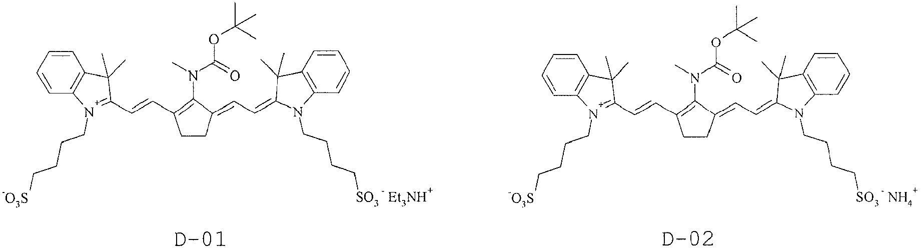

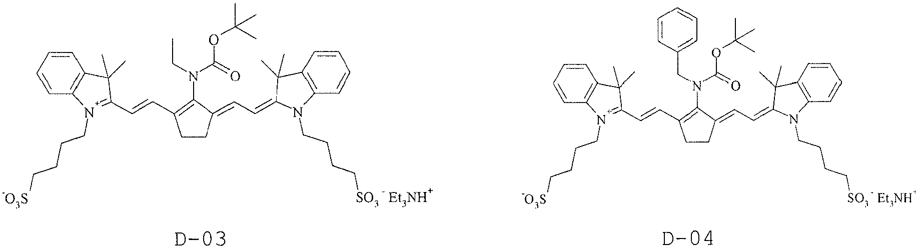

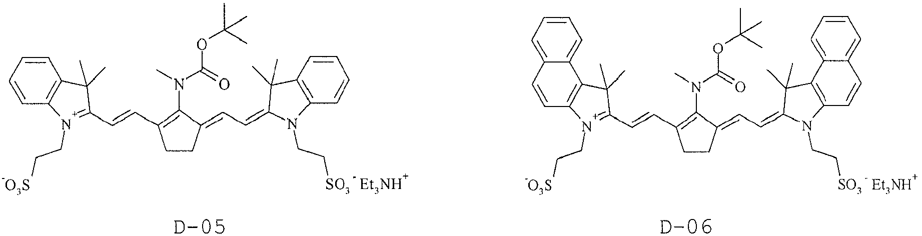

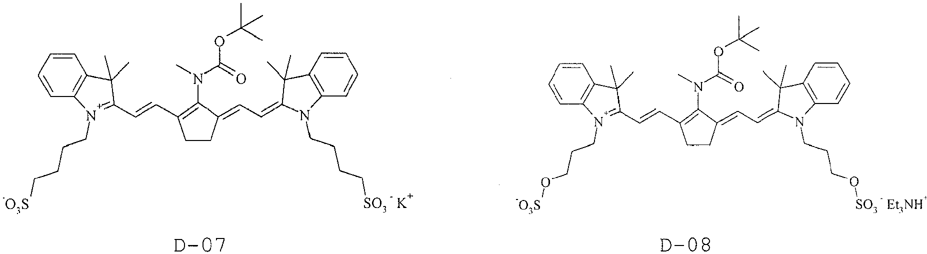

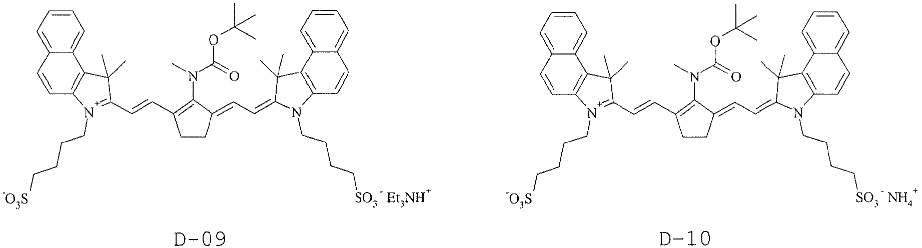

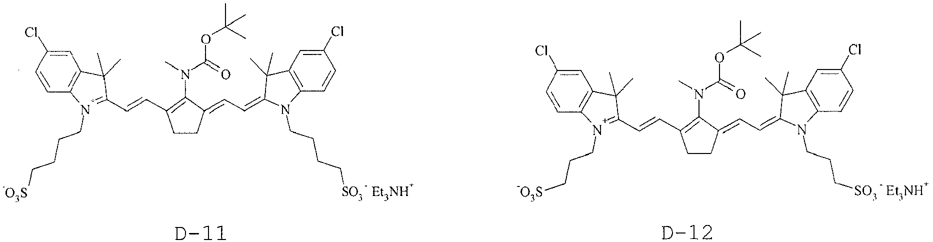

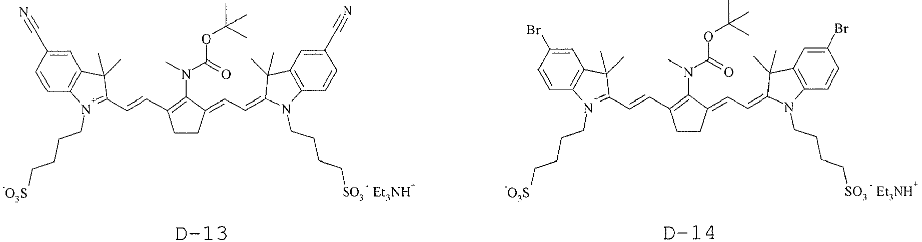

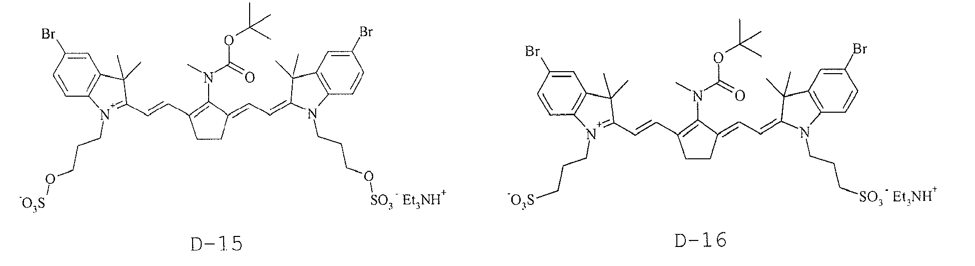

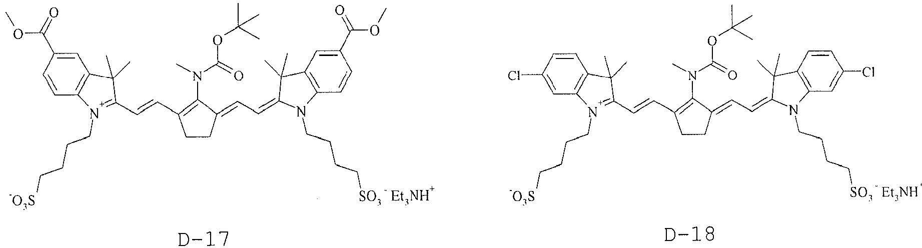

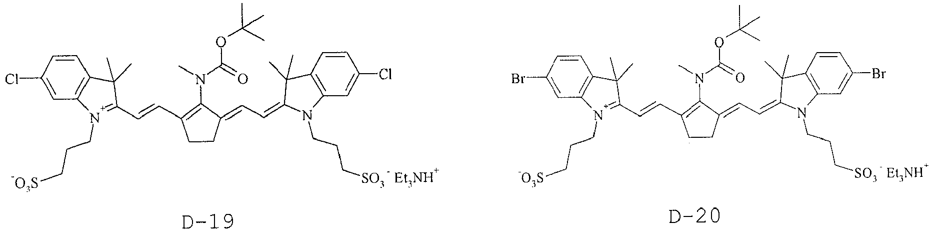

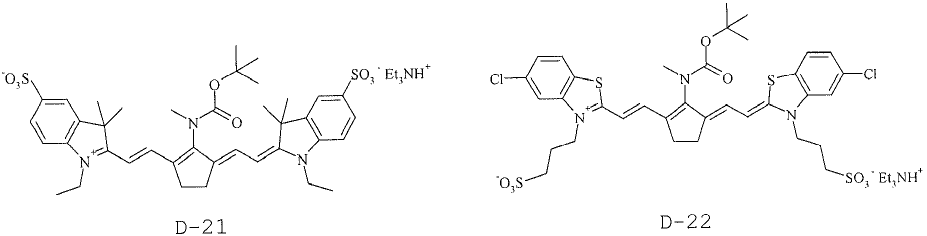

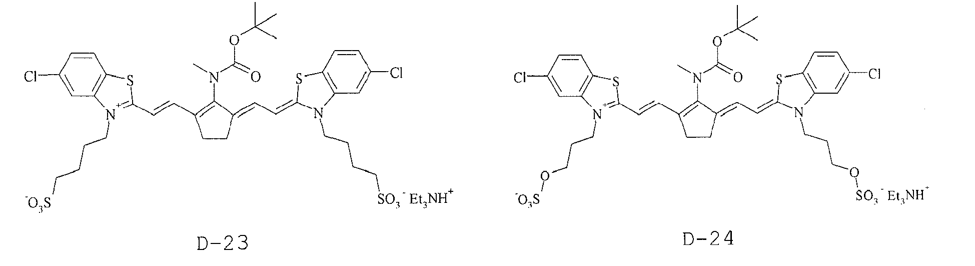

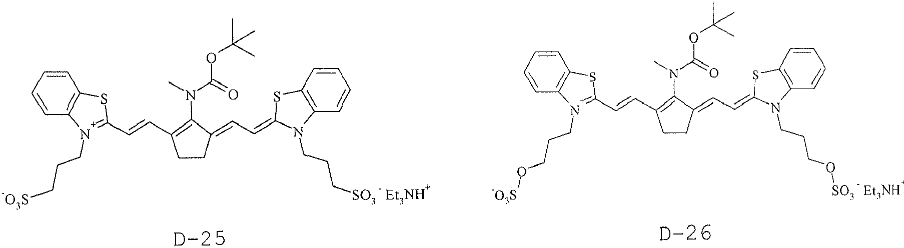

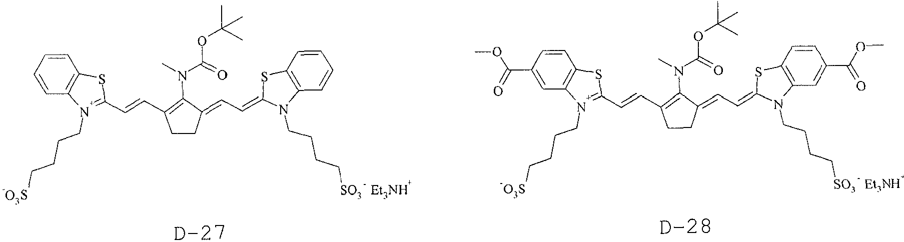

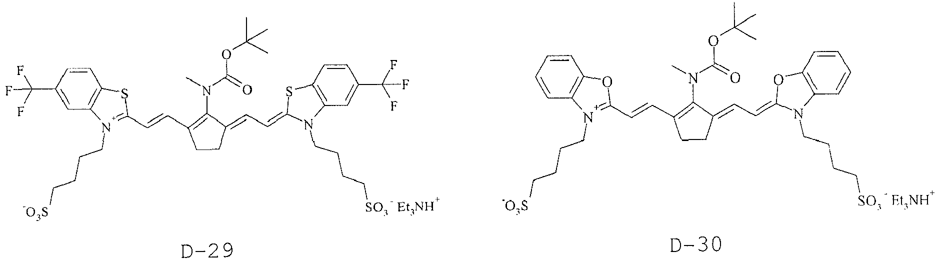

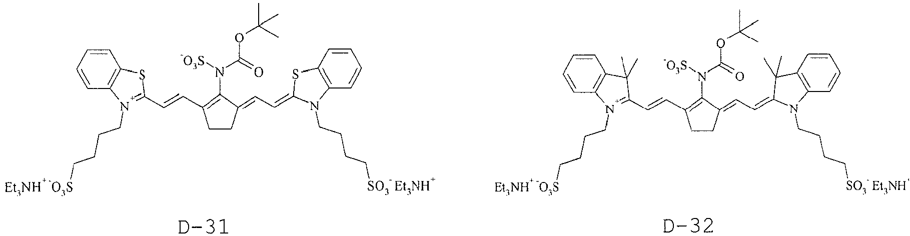

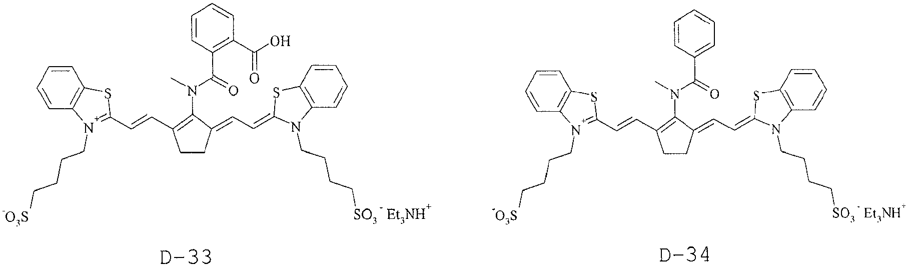

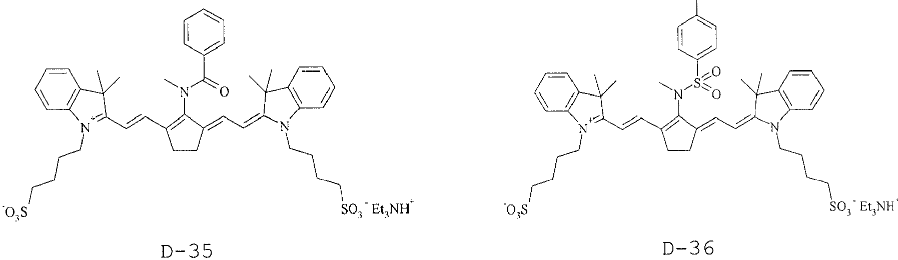

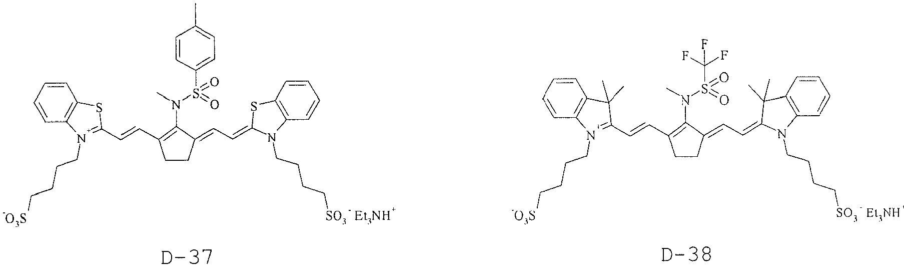

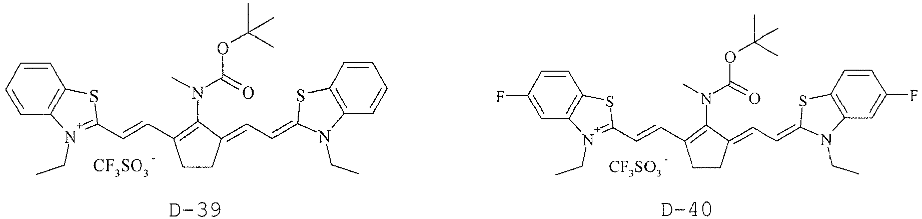

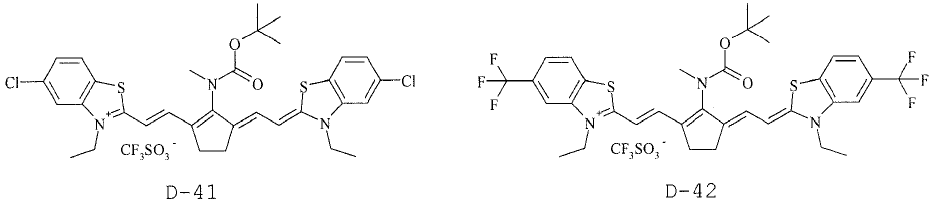

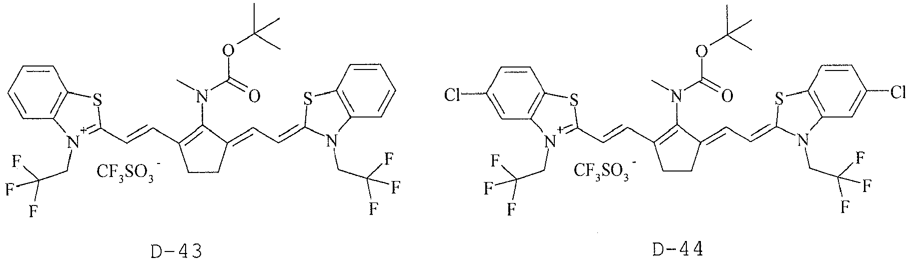

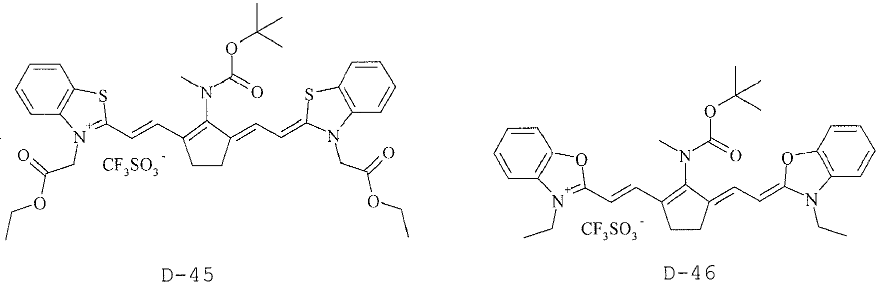

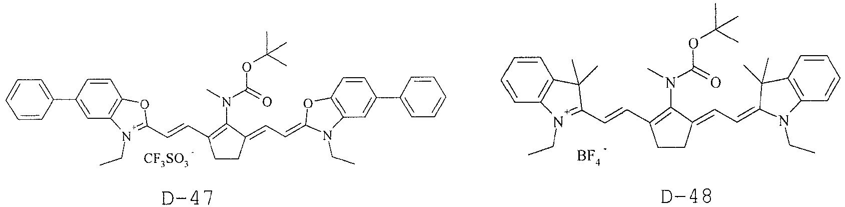

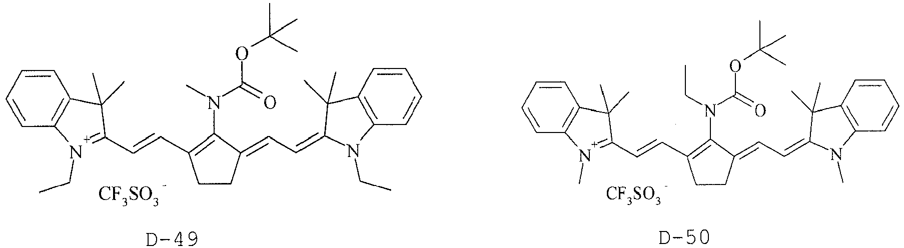

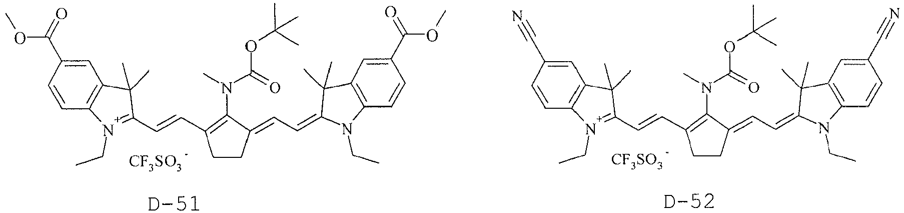

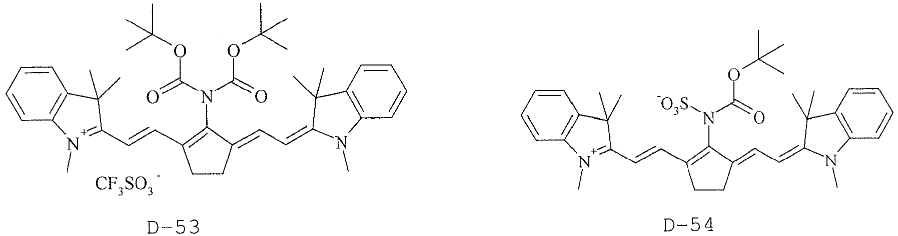

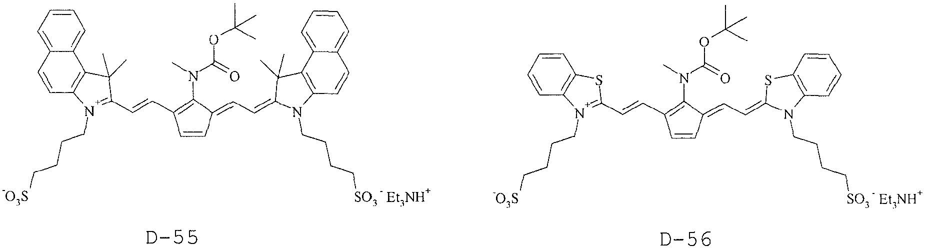

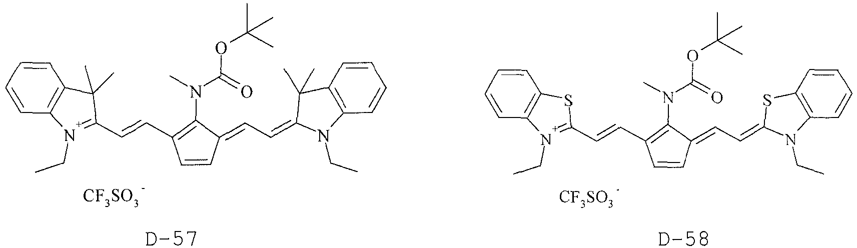

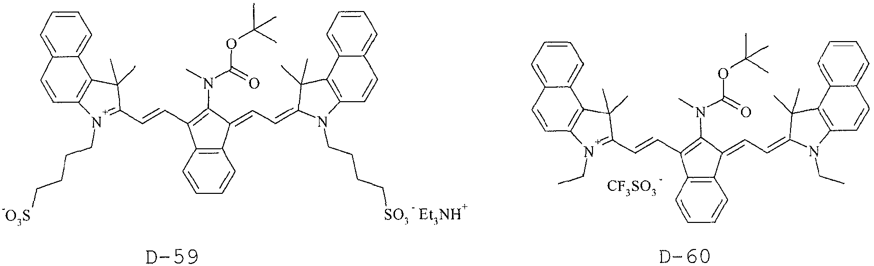

A further object of the present invention is to provide a lithographic printing plate precursor comprising an IR-dye obtained with the method as described above.

### EXAMPLES

### Example 1

### Preparation of INT-01

### Step 1

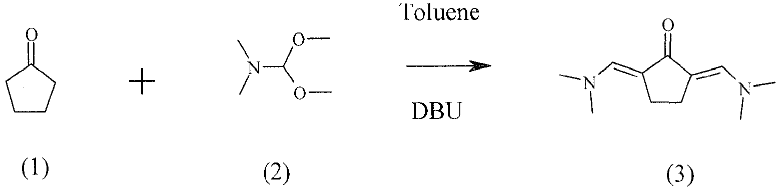

A mixture of 1.2 mole of compound(1), 5 mole of (2) and 1.0 g of DBU (1,8-diazabicyclo(5,4,0)-7-undeceen) in toluene was heated to 100 °C. After methanol has been distilled off during 20 hours, the temperature of the mixture is increased to 165 °C, whereupon the methanol has been further distilled of for another 6 hours.
After cooling and crystallisation of the mixture over night, the precipitate was washed in acetone, filtered and dried under vacuum. A crystalline powder of compound (3) was obtained with a yield of 38.6 %.

### Step 2

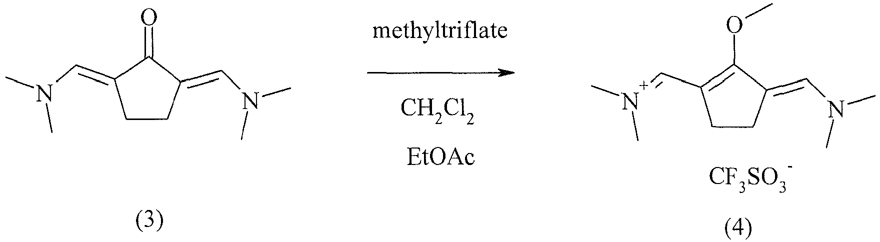

0.51 mole of compound (3) was suspended in 300 ml CH₂Cl₂ followed by the dropwise addition of 0.612 mole of methyltriflate (Methyl trifluoromethanesulfonate) during 10 minutes. After stirring the mixture for 1 hour at room temperature, compound (4) is precipitated with 2000 ml EtOAc (ethylacetate). After filtration, washing with EtOAc and drying under vacuum, compound(4) is obtained at a yield of 85 %.

### Step 3

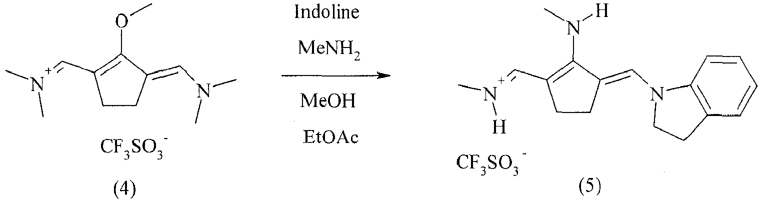

0.279 mole of (4) was suspended in 150 ml ethanol at 22°C. During 10 minutes, 1.116 mole of MeNH₂ (methylamine) was added resulting in an increase of the temperature to 39°C. The mixture was stirred for 20 minutes at 35°C. After the addition of 200 ml acetic acid, resulting in an increase of the temperature to 56°C, the mixture was cooled to 40°C on ice followed by the addition of 0.418 mole of indoline. After stirring for 1 hour at room temperature, compound (5) was precipitated with 500 ml EtOAc (ethylacetate) while stirring for 30 minutes. After filtration, washing with 2 X 100 ml EtOAc, and drying under vacuum, compound (5) was obtained at a yield of 83 %.

### Step 4

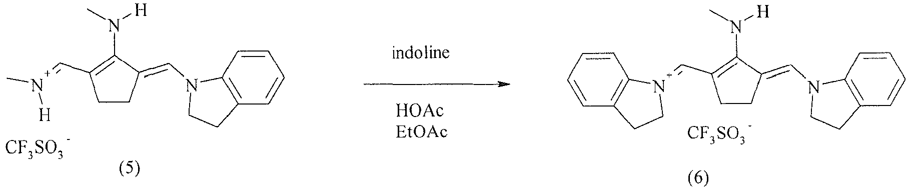

0.23 mole of compound(5) was suspended in 250 ml HOAc (Acetic Acid). After the addition of 0.46 mole of indoline while stirring, the temperature of the reaction mixture was raised to 85°C. After 5 minutes, 200 ml of HOAc was added and the reaction mixture was maintained at 85 °C for another 45 minutes. Compound (6) was precipitated with 500 ml EtOAc (Ethylacetate) while stirring for 3à minutes. After filtration, washing with 2 x 100 ml of EtOAc, and drying under vacuum, compound (6) was obtained with a yield of 96 %

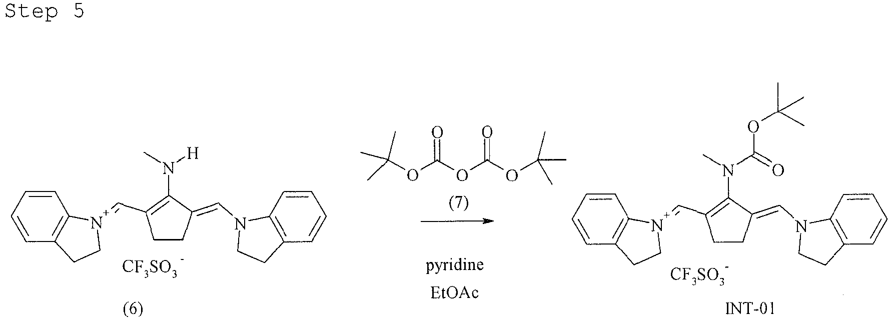

0.217 mole of compound (6) was suspended in 600 ml pyridine at 22°C. After adding 0.544 mole of compound (7) under stirring, the reaction mixture was kept at room temperature for 1 hour. After the addition of 500 ml EtOAc, the reaction mixture was stirred for another 30 minutes. After filtration, washing with 2 X 100 ml EtOAc, the filtrate was stirred in 500 ml EtOAc for 1 hour. After filtration, washing with 2 X 100 ml EtOAc and drying under vacuum, INT-01 was obtained with a yield of 94 %.

### Example 2

### Preparation of INT-01

### Step 1

The same reaction scheme and conditions were used as in synthesis method 02, described above.

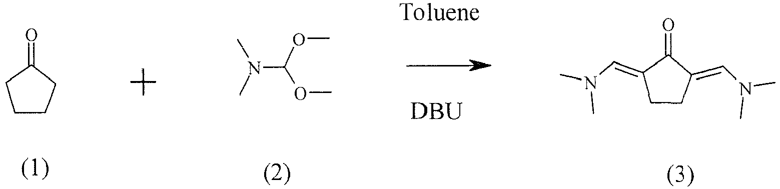

### Step 2

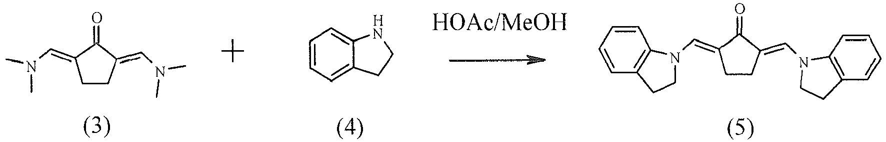

0.1511 mole of compound(3) was dissolved in 200 ml of a 4 Volume/6 Volume mixture of Acetic Acid (HOAC)/Methanol (MeOH). At room temperature, 0.4632 mole of indoline (4) was added during 10 minutes under stirring. After stirring for 2 hours at room temperature, the reaction mixture was filtered off and the precipitate washed two times with 100 ml MeOH. Purification was performed by dissolving the precipitate in 500 ml methylene chloride (CH₂Cl₂) and stirring during 1 hour, followed by precipitation with 1500 ml MeOH. After filtration and drying under vacuum, compound (5) was obtained at a yield of 95 %.

### Step 3

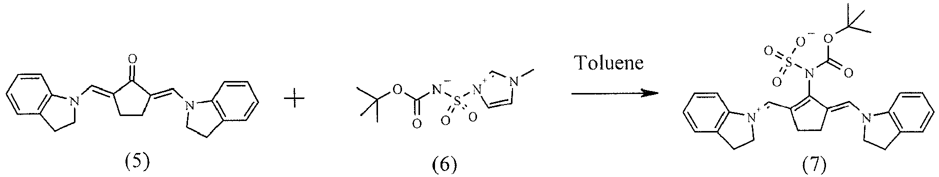

0.1217 mole of compound(5) and 0.2678 mole of compound (6) were suspended in 600 ml toluene. The reaction mixture was brought in an oil bath having a temperature of 110 °C. After 2.5 hours at 110 °C, the mixture was cooled to room temperature, followed by the addition to the mixture of 1500 ml MeOH. After stirring during 1 hour, the precipitate was filtered off, washed two times with 100 ml MeoH and dried under vacuum. Compound (7) was obtained with a yield of 83 %.

### Step 4

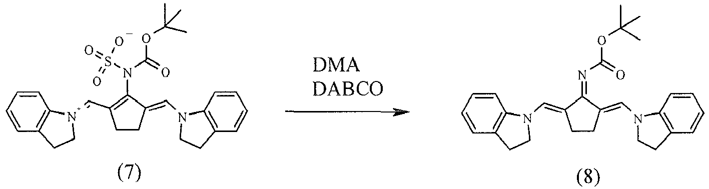

0.0364 mole of compound(7) and 0.0728 mole of DABCO (1,4-diazobicyclo(2,2,2) octane were suspended in 100 ml N,N-dimethylacetamide. The reaction mixture was brought in an oil bath having a temperature of 120 °C. The reaction was carried out at 115 °C for 15 minutes, followed by cooling the mixture in ice. 500 ml of acetonitrile was added to the precipitate, the mixture was stirred for 1 hour at room temperature and filtered off. The precipitate was washed with 200 ml t-butyl methyl ether. After filtration and drying under vacuum, compound (8) was obtained at a yield of 57 %.

### Step 5

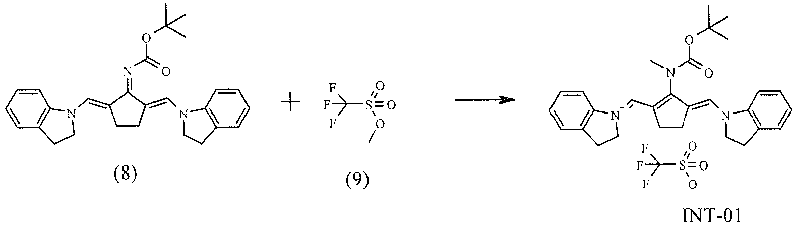

0.01299 mole of compound(8) was dissolved in 50 ml methylene chloride. 0.01559 mole of compound (9)(methyltriflate) was added dropwise to the solution, after which the solution was stirred at room temperature during another 30 minutes. After precipitation with 125 ml ethyl acetate (EtOAc), the precipitate was purified by dissolving again in 100 ml methylene chloride and precipation with 200 ml ethyl acetate. After filtration and drying under vacuum, INT-01 was obtained at a yield of 90 %.

### Example 3

### Preparation of INT-02

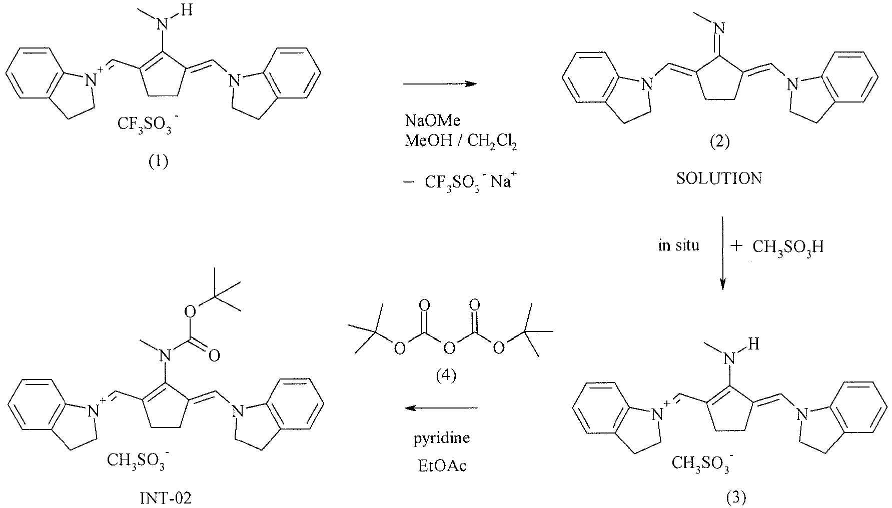

To a suspension of compound(1)(50.5 g; 0.1 mole) in methylene chloride (400 ml) is added a 30% solution of sodium methanolate (NaOMe) in methanol (18 g; 0.1 mole). After stirring for 2 hours at room temperature, the suspension is filtered (removal of sodium trifluoromethane sulfonate). The resulting solution of compound (2) is treated with methane sulfonic acid (6.48 ml ; 0.1 mole), followed by addition of ethyl acetate (2 1); upon filtration and drying, compound(3) is obtained as an orange powder (42.7 g; 940). Compound(3) (4.51 g; 10 mmole) is suspended in pyridine (150 ml) and compound(4) (6.54 g ; 30 mmole) at room temperature. After stirring for 2 hours, methanol (100 ml) is added, followed by ethyl acetate (1000 ml). Filtration and drying yields INT-02 (2.46 g ; 44%)as a blue powder (Abs. Max. (methanol)= 600 nm).

### Example 4

### Preparation of INT-06

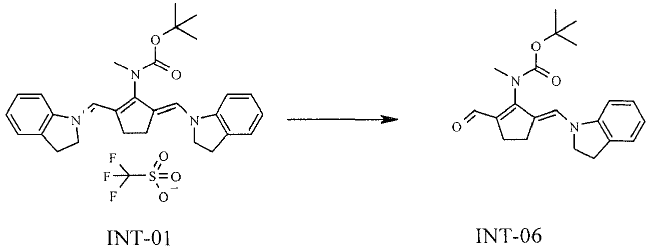

To a solution of INT-01 (5.0 g; 8.25 mmole) in a mixture of water (2 ml) and acetonitrile (18 ml) at room temperature is added acetic acid anhydride (1.55 ml; 1.65 mmole) and triethylamine (2.2 ml ; 1.65 mmole). After heating at 80°C with stirring for 30 minutes, the reaction mixture is cooled to room temperature and water (80 ml) is added. The precipitate is filtered, digested in acetonitrile (20 ml) filtered, yielding INT-06 as a yellow powder (1.56 g; 54as).

### Example 5

### Preparation of INT-03

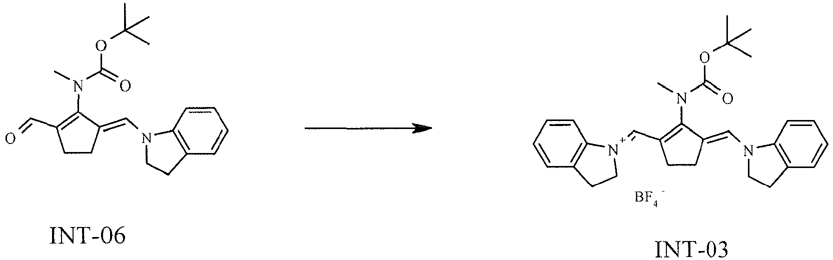

To a suspension of INT-06 (1.82 g; 5.1 mmole) in methanol (20 ml) at room temperature is added indoline (611 mg; 5.1 mmole) and an 50% aqueous solution of HBF₄ (895 mg; 5.1 mmole). After 1 hour the crude product is isolated by filtration. After dissolving the crude intermediate in methylene chloride and precipitation with methanol, followed by filtration and drying, one obtains pure INT-03 (2.19 g ; 790; Abs.Max.(methanol)= 600 nm).

### Example 6

### Preparation of INT-11

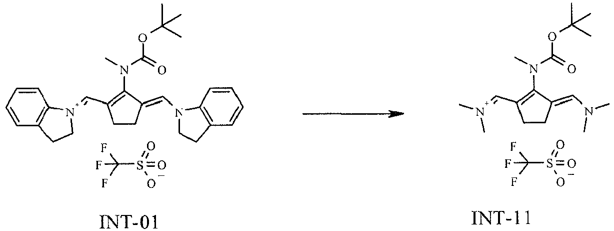

To a solution of INT-01 (6.04 g; 5 mmole) in CH₂Cl₂ (30 ml) is added dimethylammonium dimethylcarbamate (DIMCARB) (2.8 ml; 22 mmole). After stirring for 30 minutes at room temperature, an additional portion of DIMCARB (1.3 ml; 10 mmole) is added twice. Upon addition of methyl t.butyl ether (MTBE) (250 ml) INT-11 precipitates. Filtration, washing with MTBE (100 ml) and drying yields 3.14 g of INT-11 as a red powder (68%; Abs. Max. (methanol)= 478 nm).

### Example 7

### Preparation of INT-30

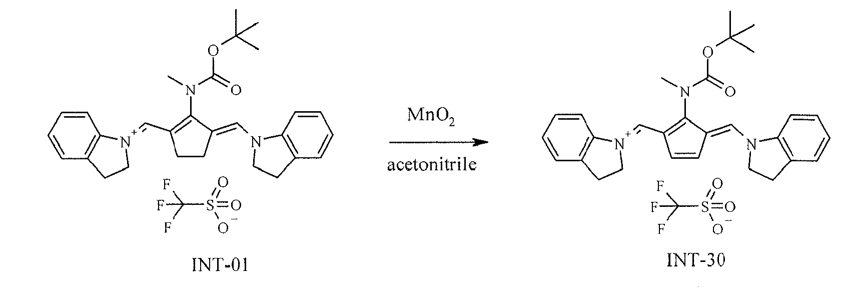

To a solution of INT-01 (5 g ; 0.82 mmole) in acetonitrile (60 ml) is added MnO₂ (6.8 g; 4.13 mmole). After stirring this suspension for 24 hours at room temperature, more acetonitrile (60 ml) and another batch of MnO₂ (6.8 g ; 4.13 mmole) are added. After stirring for 2 hours, MnO₂ is filtered off on a glass filter. To the resulting solution is added ethyl acetate (2.0 1) to precipitate INT-30. After filtration and drying in vacuo, 3.11 g of INT-30 is obtained (63% yield ; Abs. Max. (methanol)= 466/493 nm).

### Example 8

### Preparation of INT-20

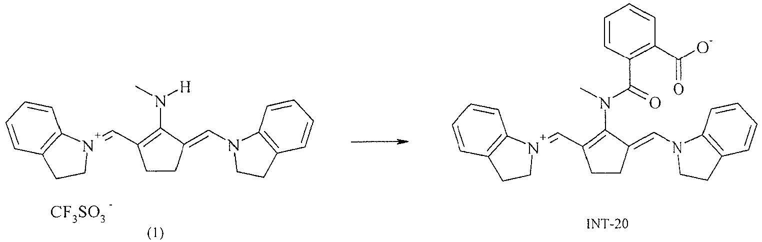

To a solution of compound(1) (10 g ; 19.7 mmole) and quinuclidine (2.2g; 19.7 mmole) in dimethyl sulfoxide (DMSO) (100 ml) are added at room temperature triethylamine (16.4 ml; 118.2 mmole) and phthalic acid anhydride (17.5 g; 118.2 mmole). After stirring for 2 hours, INT-20 is precipitated by adding methanol (400 ml). Filtration and drying provides 6.97 g of INT-20 as a black powder. (70 %; Abs. Max.(methanol) = 602 nm).

### Example 9

### Preparation of INT-19

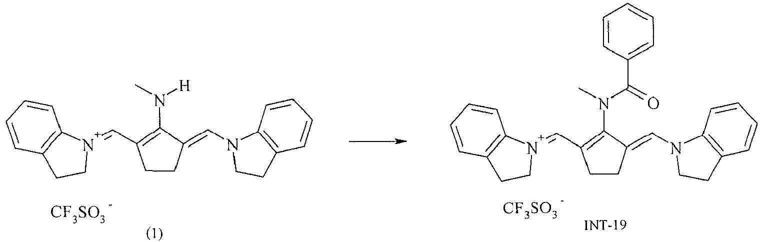

To a suspension of compound(1) (25.3 g; 0.05 mmole) in pyridine (50 ml) at room temperature is added triethylamine (27.7 ml ; 0.2 mole) and benzoyl chloride (23.2 ml; 0.2 mole). After 30 minutes, ethyl acetate (300 ml) is added to precipitate INT-19. Filtration, digestion in water (100 ml) to remove salts and drying in vacuo results in 28.96 g of INT-19 (95% ; Abs. Max.(methanol)= 609 nm).

### Example 10

### Preparation of INT-27

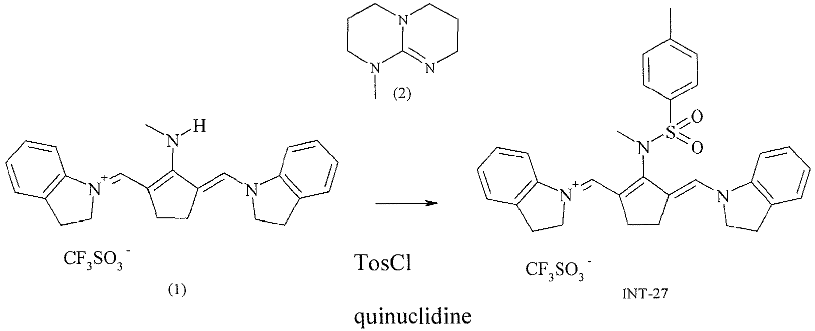

To a suspension of compound(1) (1.0 g; 1.97 mmole) in methylene chloride (50 ml) at room temperature are added quinuclidine (657 mg; 5.91 mmole), compound (2)(0.42 ml; 2.95 mmole), triethylamine (0.55 ml; 4.0 mmole) and p.toluene sulfonylchloride (1.5 g; 7.88 mmole). After stirring for 1 hour, another portion of compound (2) (0.21 ml ; 1.5 mmole) and p. toluene sulfonylchloride (0.75 g ; 3.94 mmole) is added. After 30 minutes, acetonitrile (50 ml) is added. Filtration removes residual starting material (with chloride counter ion). Upon addition of MTBE to this solution, crude INT-27 precipitates and is isolated by filtration. Digestion with water, filtration, washing with ethyl acetate and drying yields 1.1 g of INT-27 (83%; Abs. Max.(methanol)= 605 nm).

### Example 11

### Preparation of D-01 from INT-01 prepared by the method of example 1

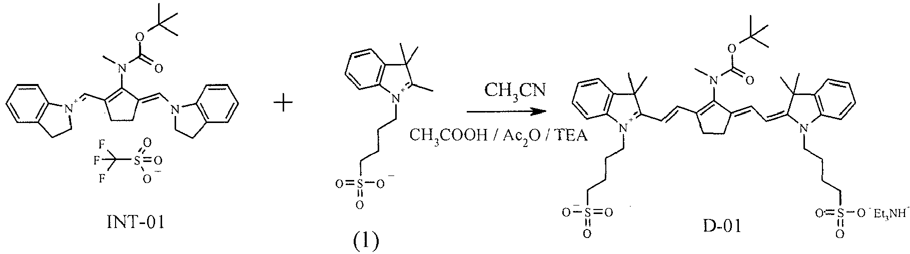

0.5 mole of compound(1) and 0.2 mole of INT-01 were suspended in 600 ml CH₃CN (acetonitrile) at 22°C. After addition of 0.6 mole of HOAc (acetic acid) the temperature raised to 30°C. 1.0 mole of Ac₂0 (acetic acid anhydride) was added at 30°C, followed by the dropwise addition during 10 minutes of 0.8 mole of TEA (triethyl-amine). The reaction mixture was kept 80°C for 1.5 hour. After cooling down the temperature to room temperature, precipitation was induced by adding a mixture of 4000 ml EtOAc/40 ml water. The mixture was kept over night, followed by filtration, washing with 2 x EtOAc. The filtrate was further stirred in 1000 ml Acetone followed by the addition of 0.02 mole of TEA. After filtration, washing with 2 x 100 ml acetone, and drying under vacuum, D-01 was obtained with a yield of 87 %.

### Example 12

### Preparation of D-01 from INT-01 prepared by the method of example 2

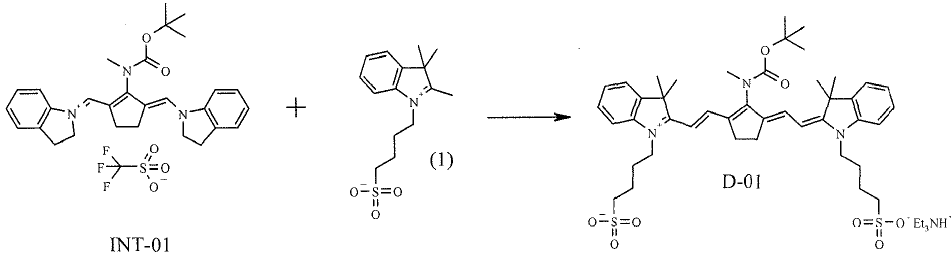

11.55 mmole of INT-01 and 28.89 mmole of compound (1) were suspended in 50 ml of acetonitrile. 34.65 mmole of acetic acid and 57.75 mmole of acetic acid anhydride were added followed by the dropwise addition of 46.2 mmole of triethylamine. The mixture was heated to 80 °C and reacted during 3 hours. After cooling the mixture to room temperature, precipitation was carried out by adding a solution of 500 ml ethylacetate and 10 ml water. After filtration, the precipitate was washed with 200 ml acetone during 1 hour. After filtration and drying under vacuum, D-01 was obtained with a yield of 72 %.

### Example 13

### Preparation of D-02

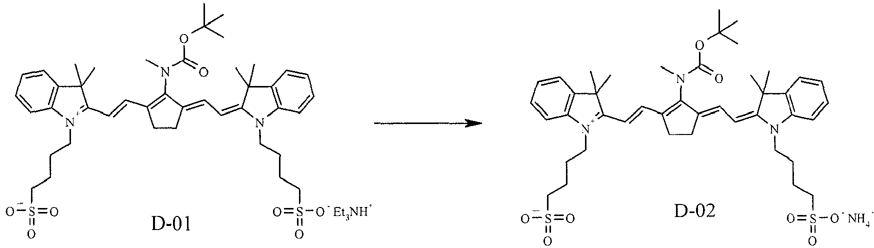

1 mmole of D-01 was dissolved in 10 ml MeoH. 1.1 mmole of ammonium acetate was added to the solution. After stirring the solution for 30 minutes, precipitation was carried out with a solution of 100 ml ethylacetate and 2 ml water. After filtration and drying under vacuum, D-02 was obtained with a yield of 81 %.

### Example 14

### Preparation of D-39

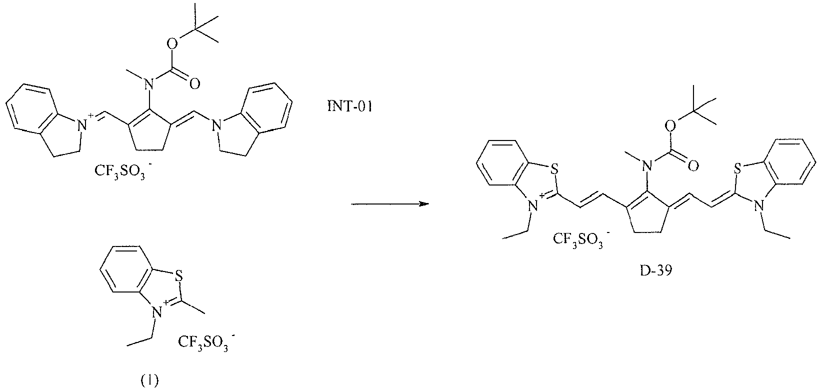

To a solution of INT-01 (3.03 g; 5 mmole) and compounds(1) (3.6 g ; 11 mmole) in acetonitrile (25 ml) at room temperature is added triethylamine (2.1 ml; 15 mmole). After stirring for 1 hour, filtering the precipitate, washing with acetonitrile (10 ml) and drying, 3.07 g of D-39 is obtained (yield = 85%; Abs. Max. (methanol)= 827 nm).

### Example 15

### Preparation of D-09

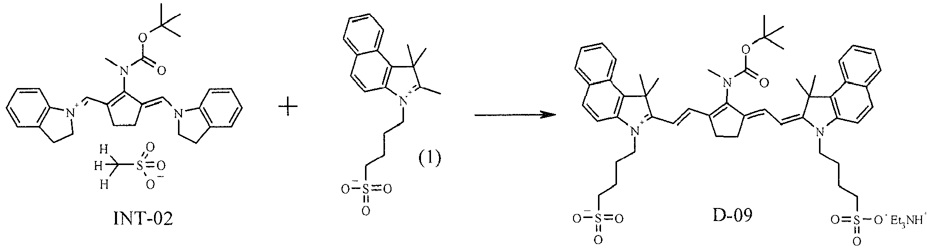

To a suspension of INT-02 (1.5 g ; 2.7 mmole) and compound(1) (2.06 g ; 5.98 mmole)in acetonitrile (15 ml) at room temperature is added acetic acid (0.46 ml ; 8.1 mmole), acetic acid anhydride (1.26 ml; 13.5 mmole) and triethylamine (1,5 ml; 10.8 mmole). After heating at 80°C for 3 hours, cooling, addition of ethyl acetate containing 1% water (100 ml),filtration and drying yields D-09 (2.16 g; 79%; Abs. Max.(methanol)= 852nm).

### Example 16

### Preparation of D-48

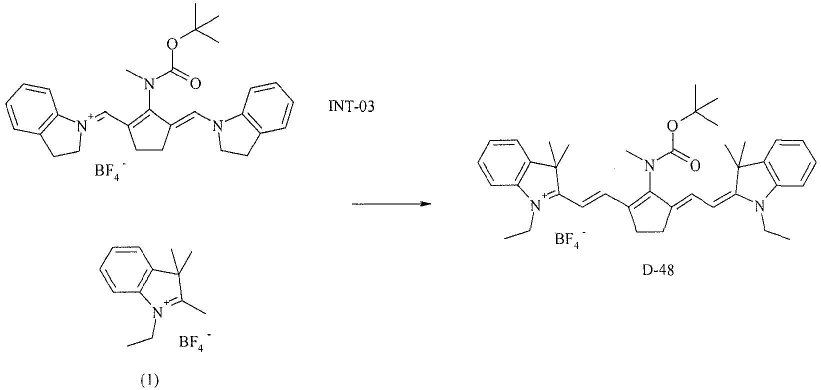

To a suspension of INT-03 (2.16 g; 3.9 mmole) and compound(1) (2.4 g ; 8.7 mmole) in acetonitrile at room temperature is added acetic acid (0.66 ml; 11.7 mmole), acetic acid anhydride (1.8 ml; 19.5 mmole),followed by heating the reaction mixture at 80°C for 15 minutes. After cooling to room temperature, the crude compound(2) is precipitated by adding a solution of methanol/water 1V/1V (60 ml).
After isolation by filtration, the crude product is dissolved in methanol (30 ml). After filtration (to remove impurities), water (30 ml) is added to crystallize D-48. After filtration and drying, 790 mg of D-48 is obtained (30%; Abs.Max.(methanol) = 807 nm).

### Example 17

### Preparation of D-55

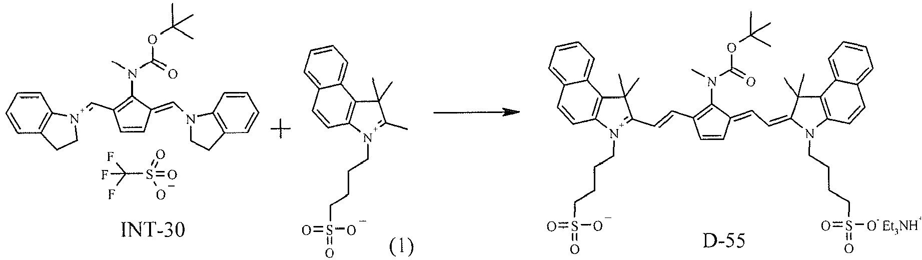

To a suspension of compound(1) (760 mg; 2.2 mmole) and INT-30 (603 mg ; 1 mmole) in acetonitrile (10 ml) at room temperature is added acetic acid (0.17 ml ; 3 mmole), acetic acid anhydride (0.47 ml ; 5 mmole) and triethylamine (0.55 ml ; 4 mmole). Under stirring, this mixture is heated at 80°C for 3 hours. After cooling to room temperature, ethyl acetate containing 1 % water (100 ml) is added. After filtration and drying in vacuo, 697 mg of D-55 is obtained (70% ; Abs. Max.(methanol)= 729 nm).

### Example 18

### Preparation of D-33

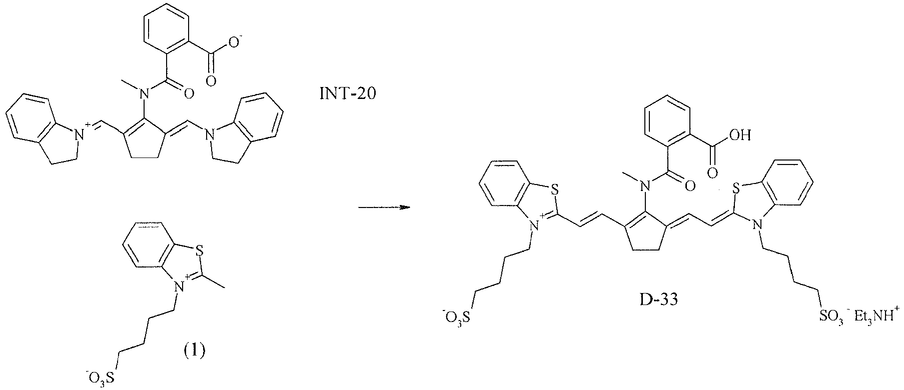

To a mixture of compound(1) (2.51 g; 8.8 mmole) and INT-20 (2.01 g ; 4 mmole) in DMSO (20 ml) is added triethylamine (2.2 ml; 16 mmole) at room temperature. After stirring for 2 hours, a solution of 1% water in ethyl acetate (100 ml) is added. Filtration and drying provides 3.4 g of D-33 as a green powder (91% ; Abs. Max.(methanol) = 833 nm).

### Example 19

### Preparation of D-31

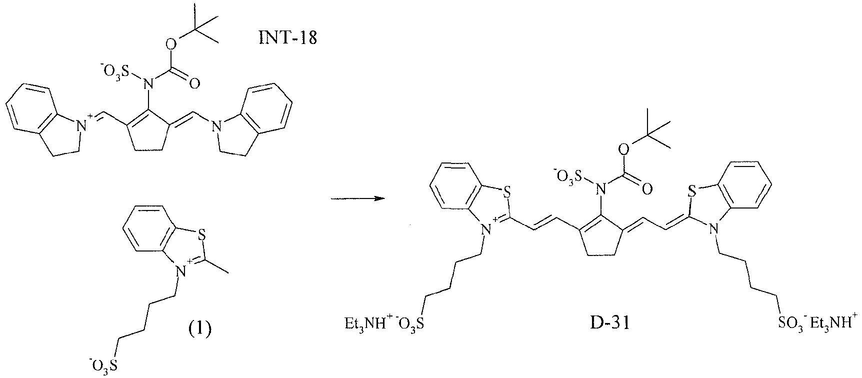

To a suspension of compound(1) (6.27 g; 22 mmole) and INT-18 (5.21 g ; 10 mmole) in dimethylacetamide (DMA) (50 ml) at room temperature is added triethylamine (5.5 ml; 40 mmole). After 1 hour, additional DMA (50 ml) is added. After stirring overnight at room temperature, filtration , digesting in ethyl acetate (100 ml), filtration and drying in vacuo provides 7.79 g of D-31 as a greenisch powder (74%; Abs. Max.(methanol)= 807 nm).

### Example 20

### Preparation of D-34

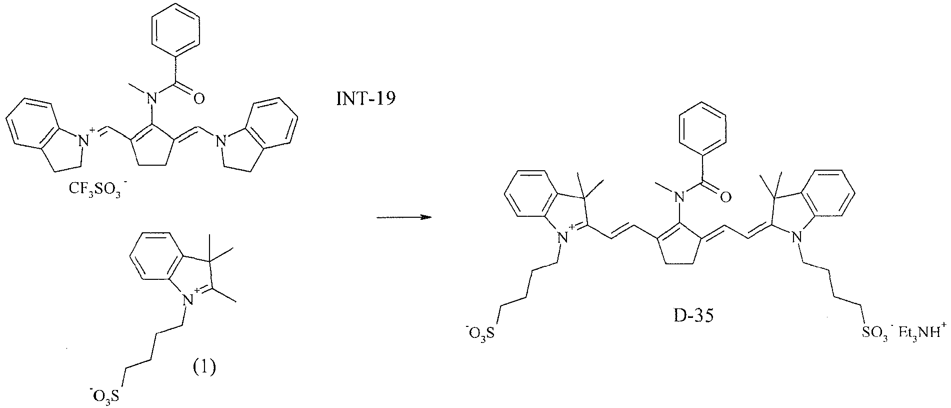

To a suspension of compound(1) (6.49 g; 22 mmole) and INT-19 (6.09 g ; 10 mmole) in acetonitrile (30 ml) at room temperature are added acetic acid (1.7 ml; 30 mmole) and triethylamine (5.5 ml ; 40 mmole).
After heating for 2 hours at 80°C and cooling to room temperature, the raction product is precipitated by adding a solution of 1% water in ethyl acetate (60 ml). Filtration, digesting in ethyl acetate (50 ml), filtration and drying in vacuo results in 7.21 g of D-35 as a dark green powder (79 % ; Abs. Max.(methanol)= 820 nm).

## Claims

1. A compound according to Formula I, 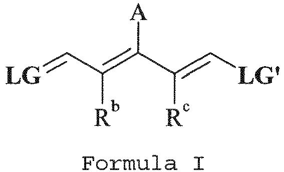 wherein
R^{b} and R^{c} independently represent a hydrogen atom or an optionally substituted alkyl group or represent the necessary atoms to form an optionally substituted ring structure;
LG represents a leaving group precursor selected from the list consisting of: 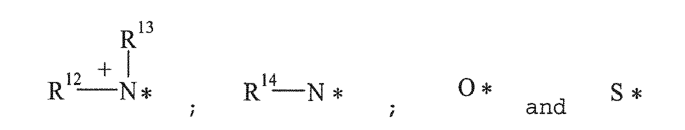 LG' represents a leaving group precursor selected from the list consisting of: 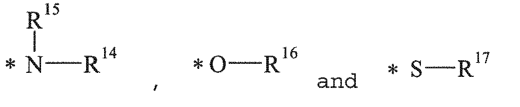 wherein
R¹², R¹³, R¹⁴, R , R and R independently represent a hydrogen atom, an optionally substituted alkyl group, an optionally substituted (hetero)aryl group or wherein R¹² and R¹³ or R¹⁴ and R¹⁵ represent the necessary atoms to form a cyclic structure,
* represents the linking position of LG and LG' in Formula I;
A is selected from the list consisting of:
- NR¹-CO-R²
- NR¹-SO₂-R³
- NR⁴-SO-R⁵
- NR¹-PO-R⁶R⁷
wherein
R¹ represents a hydrogen atom, an optionally substituted alkyl group, a -SO₃ group, a -COOR⁸ group or an optionally substituted (hetero)aryl group, or R¹ together with at least one of R⁹, R¹⁰ and R¹¹ comprise the necessary atoms to form a ring structure;
R² represents an optionally substituted alkyl or (hetero)aryl group, -OR⁹, -NR¹⁰R¹¹ or CF₃;
R³ represents an optionally substituted alkyl group, an optionally substituted (hetero)aryl group, -OR⁹, -NR¹⁰R¹¹ or -CF₃;
R⁴ represents a hydrogen atom, an optionally substituted alkyl group or an optionally substituted (hetero)aryl group;
R⁵ represents an optionally substituted alkyl group or an optionally substituted (hetero)aryl group;
R⁶ and R⁷ independently represent an optionally substituted alkyl group, an optionally substituted aryl group or -OR⁹;
R⁸ represents an optionally substituted aryl group or an optionally alkyl group;
R⁹ represents is an optionally substituted (hetero)aryl group or an optionally alkyl group;
R¹⁰ and R¹¹ independently represent a hydrogen atom, an optionally substituted alkyl group, an optionally substituted (hetero)aryl group or represent the necessary atoms to form a cyclic structure.

2. The compound according to claim 1 wherein A is selected from the list consisting of: 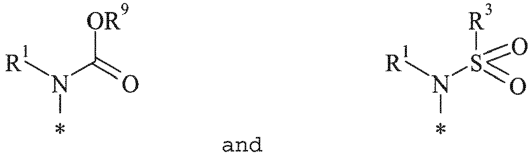 wherein
R¹ has the same meaning as in claim 1, R⁹ represents an optionally susbstituted branched alkyl group and R³ represents -CF₃, an optionally substituted aryl group or -NR¹⁰R¹¹ wherein R¹⁰ and R¹¹ have the same meaning as in Formula I.

3. The compound according to any of the preceding claims having a structure according to Formulae II, IIIa, IIIb and IV, 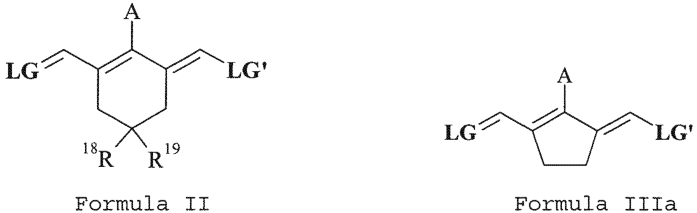 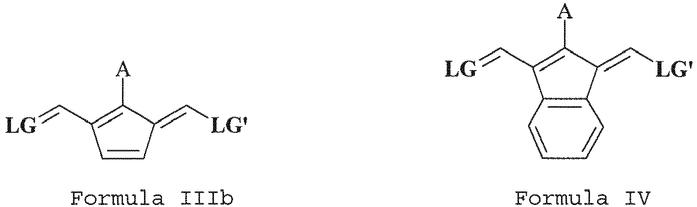 wherein
LG, LG' and A have the same meaning as in Formula I;
R¹⁸ and R¹⁹ independently represent a hydrogen atom, an optionally substituted alkyl group, an optionally substituted (hetero)aryl group, -CN, -CO₂R²⁰ or COR²¹ wherein R²⁰ represents a hydrogen atom or an alkyl group and R²¹ represents a hydrogen atom, an optionally substituted alkyl group or an optionally substituted (hetero)aryl group.

4. The compound according to any of the preceding claims having a structure according to Formula IIIa or IIIb, 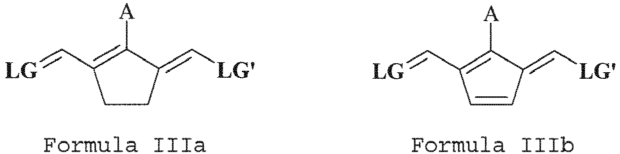 wherein
LG, LG' and A have the same meaning as in Formula I.

5. The compound according to any of the preceding claims having a structure according to Formula V, 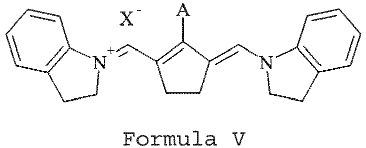 wherein
A has the same meaning as in formula I;
X renders the compound neutral.

6. The compound according to any of the preceding claims having a structure according to Formula XI, 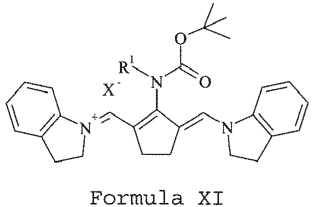 wherein
R¹ has the same meaning as in Formula 1 and X⁻ renders the compound neutral.

7. A method for making a cyanine dye according to Formula XII 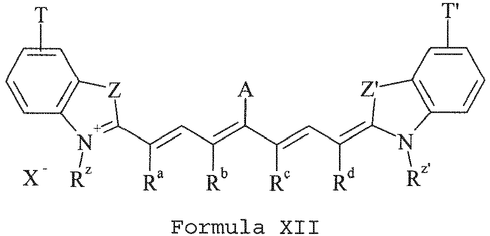 wherein
T and T' independently represent one or more substituents or an annulated ring;
Z and Z' independently represent -O-, -S-, -CH=CH- or -CR^{e}R^{f}-and wherein R^{e} and R^{f} independently represent an optionally substituted alkyl or aryl group;
R^{z} and R^{z'} independently represent an optionally substituted alkyl group;
R^{b} and R^{c} have the same meaning as in claim I,
R^{a} and R^{d} independently represent a hydrogen atom or an optionally substituted alkyl group;
R^{z} and R^{a}, R^{d} and R^{z'} may represent the necessary atoms to form an optionally substituted 5- or 6-membered ring;
X renders the dye neutral,
comprising the step of reacting an intermediate compound as defined in any one of claims 1 to 6 with an indolium or azolium compound according to Formula XIII and an indolium or azolium compound according to Formula XIV, 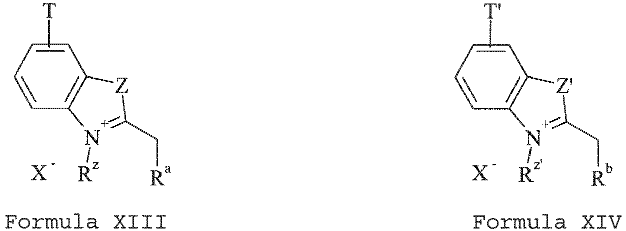 wherein
T, T', Z, Z', R^{z}, R^{z'}, R^{a}, R^{b} and X have the same meaning as in Formula XII.

8. The method according to claim 7 wherein the indolium or azolium compounds have a structure according to Formula XVIIIa and Formula XVIIIb, 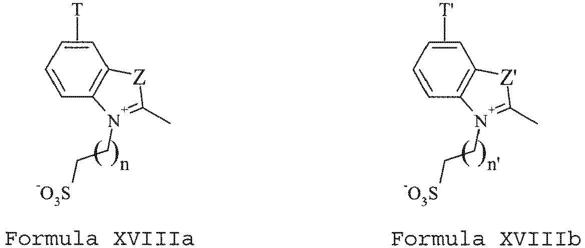 wherein
T, T', Z and Z' have the same meaning as in Formula XXII; n and n' independently represent an integer ranging from 1 to 3.

9. The method according to claim 7 wherein the indolium or azolium compounds have a structure according to Formula XIXa and Formula XIXB, 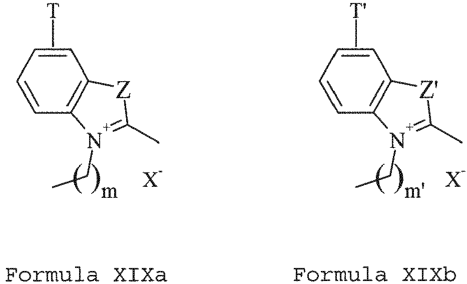 wherein
T, T', Z and Z' have the same meaning as in Formula XXII;
m and m' independently represent an integer ranging from 0 to 15;
X renders the compounds neutral.

10. The method according to claim 7 wherein the indolium or azolium compounds according to Formulae XIII and XIV are identical.

11. A lithographic printing plate precursor comprising an IR-dye obtained with the method as defined in claims 7 to 10.

## Patentansprüche

1. Eine Verbindung gemäß Formel I, 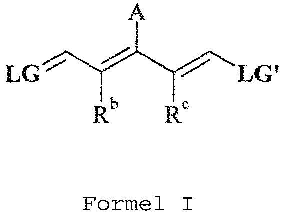 in der
R^{b} und R^{c} unabhängig voneinander ein Wasserstoffatom oder eine gegebenenfalls substituierte Alkylgruppe bedeuten oder die zur Bildung einer gegebenenfalls substituierten Ringstruktur benötigten Atome bedeuten,
LG einen Abgangsgruppenvorläufer bedeutet, ausgewählt aus der Liste bestehend aus: 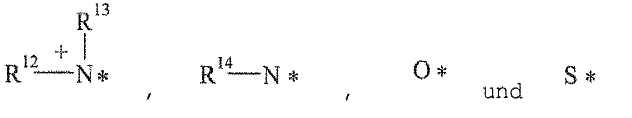
LG' einen Abgangsgruppenvorläufer bedeutet, ausgewählt aus der Liste bestehend aus: 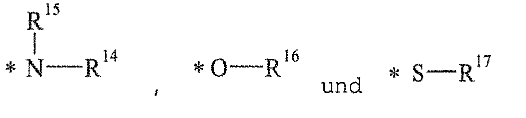 in denen
R¹², R¹³, R¹⁴, R¹⁵, R¹⁶ und R¹⁷ unabhängig voneinander ein Wasserstoffatom, eine gegebenenfalls substituierte Alkylgruppe oder eine gegebenenfalls substituierte (Hetero)arylgruppe bedeuten oder in denen R¹² und R¹³ oder R¹⁴ und R¹⁵ die zur Bildung einer Ringstruktur benötigten Atome bedeuten,
* die Bindungsstelle von LG und LG' in Formel I bedeutet,
A ausgewählt wird aus der Liste bestehend aus:
- NR¹-CO-R²
- NR¹-SO₂-R³
- NR⁴-SO-R⁵
- NR¹-PO-R⁶R⁷
in denen
R¹ ein Wasserstoffatom, eine gegebenenfalls substituierte Alkylgruppe, eine -SO₃⁻-Gruppe, eine -COOR⁸-Gruppe oder eine gegebenenfalls substituierte (Hetero)arylgruppe bedeutet oder R¹ zusammen mit mindestens einem von R⁹, R¹⁰ und R¹¹ die zur Bildung einer Ringstruktur benötigten Atome umfassen,
R² eine gegebenenfalls substituierte Alkylgruppe oder (Hetero)arylgruppe, -OR⁹, -NR¹⁰R¹¹ oder CF₃ bedeutet,
R³ eine gegebenenfalls substituierte Alkylgruppe, eine gegebenenfalls substituierte (Hetero)arylgruppe, -OR⁹, -NR¹⁰R¹¹ oder -CF₃ bedeutet,
R⁴ ein Wasserstoffatom, eine gegebenenfalls substituierte Alkylgruppe oder eine gegebenenfalls substituierte (Hetero)arylgruppe bedeutet,
R⁵ eine gegebenenfalls substituierte Alkylgruppe oder eine gegebenenfalls substituierte (Hetero)arylgruppe bedeutet,
R⁶ und R⁷ unabhängig voneinander eine gegebenenfalls substituierte Alkylgruppe, eine gegebenenfalls substituierte Arylgruppe oder - OR⁹ bedeuten,
R⁸eine gegebenenfalls substituierte Arylgruppe oder eine gegebenenfalls substituierte Alkylgruppe bedeutet,
R⁹ eine gegebenenfalls substituierte (Hetero)arylgruppe oder eine gegebenenfalls substituierte Alkylgruppe bedeutet,
R¹⁰ und R¹¹ unabhängig voneinander ein Wasserstoffatom, eine gegebenenfalls substituierte Alkylgruppe, eine gegebenenfalls substituierte (Hetero)arylgruppe oder die zur Bildung einer Ringstruktur benötigten Atome bedeuten.

2. Die Verbindung nach Anspruch 1, wobei A ausgewählt wird aus der Liste bestehend aus: 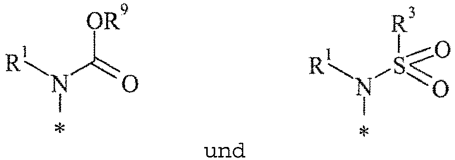 in denen
R¹ die gleiche Bedeutung wie in Anspruch 1 hat, R⁹ eine gegebenenfalls substituierte verzweigte Alkylgruppe bedeutet und
R³ -CF₃, eine gegebenenfalls substituierte Arylgruppe oder - NR¹⁰R¹¹, in der R¹⁰ und R¹¹ die gleiche Bedeutung wie in Formel I haben, bedeutet.

3. Die Verbindung nach einem der vorstehenden Ansprüche, die eine
Struktur gemäß den Formeln II, IIIa, IIIb und IV aufweist, 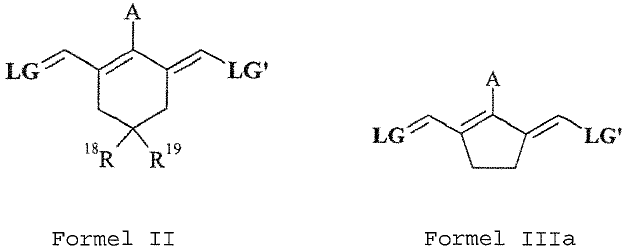 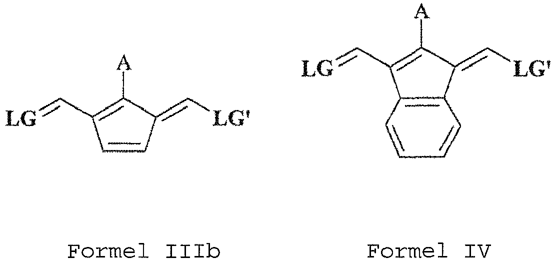 in denen
LG, LG' und A die gleiche Bedeutung wie in Formel I haben, R¹⁸ und R¹⁹ unabhängig voneinander ein Wasserstoffatom, eine gegebenenfalls substituierte Alkylgruppe, eine gegebenenfalls substituierte (Hetero)arylgruppe, -CN, -CO₂R²⁰ oder COR²¹ bedeuten, in denen R²⁰ ein Wasserstoffatom oder eine Alkylgruppe bedeutet und R²¹ ein Wasserstoffatom, eine gegebenenfalls substituierte Alkylgruppe oder eine gegebenenfalls substituierte (Hetero)arylgruppe bedeutet.

4. Die Verbindung nach einem der vorstehenden Ansprüche, die eine Struktur gemäß den Formeln IIIa oder IIIb aufweist, 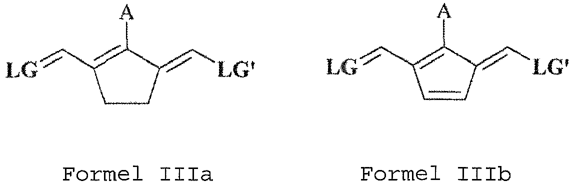 in denen
LG, LG' und A die gleiche Bedeutung wie in Formel I haben.

5. Die Verbindung nach einem der vorstehenden Ansprüche, die eine Struktur gemäß Formel V aufweist, 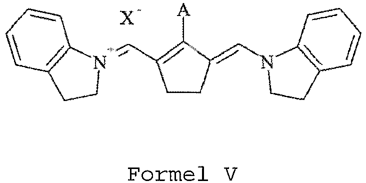 in der
A die gleiche Bedeutung wie in Formel I hat,
X- die Verbindung neutral macht.

6. Die Verbindung nach einem der vorstehenden Ansprüche, die eine Struktur gemäß Formel XI aufweist, 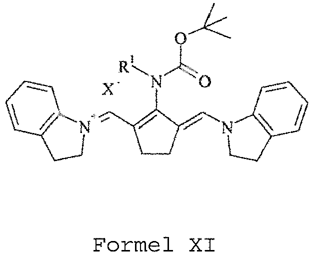 in der
R¹ die gleiche Bedeutung wie in Formel I hat und X- die Verbindung neutral macht.

7. Ein Verfahren zur Herstellung eines Cyaninfarbstoffes gemäß Formel XII 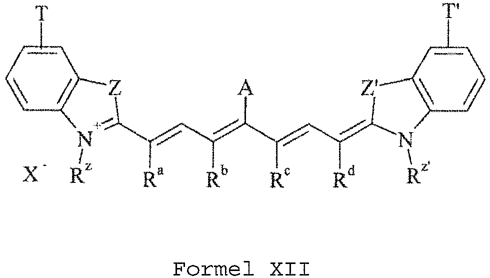 in der
T und T' unabhängig voneinander einen oder mehrere Substituenten oder einen anellierten Ring bedeuten,
Z und Z' unabhängig voneinander -O-, -S-, -CH=CH- oder -CR^{e}R^{f}-bedeuten und in der R^{e} und R^{f} unabhängig voneinander eine gegebenenfalls substituierte Alkylgruppe oder Arylgruppe bedeuten,
R^{z} und R^{z'} unabhängig voneinander eine gegebenenfalls substituierte Alkylgruppe bedeuten,
R^{b} und R^{c} die gleiche Bedeutung wie in Anspruch 1 haben,
R^{a} und R^{d} unabhängig voneinander ein Wasserstoffatom oder eine gegebenenfalls substituierte Alkylgruppe bedeuten,
R^{z} und R^{a}, R^{d} und R^{z'} die zur Bildung eines gegebenenfalls substituierten 5- oder 6-gliedrigen Ringes benötigten Atome bedeuten,
X- den Farbstoff neutral macht,
umfassend den Schritt, in dem eine wie in einem der Anspruche 1 bis 6 definierte Zwischenverbindung mit einer Indolium- oder Azoliumverbindung gemäß Formel XIII und einer Indolium- oder Azoliumverbindung gemäß Formel XIV in Reaktion gebracht wird, 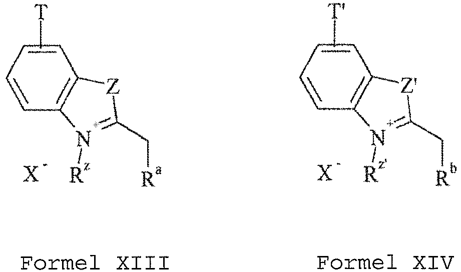 in denen
T, T', Z, Z', R^{z}, R^{z'}, R^{a}, R^{b} und X⁻ die gleiche Bedeutung wie in Formel XII haben.

8. Das Verfahren nach Anspruch 7, wobei die Indolium- oder Azoliumverbindungen eine Struktur gemäß Formel XVIIIa und Formel XVIIIb haben, 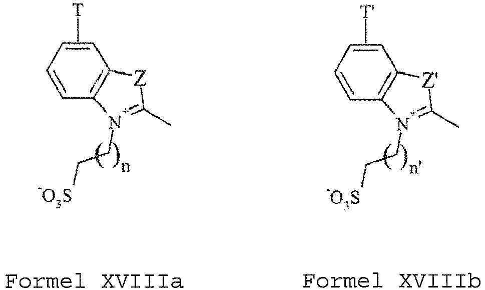 in denen
T, T', Z und Z' die gleiche Bedeutung wie in Formel XXII haben,
n und n' unabhängig voneinander eine ganze Zahl von 1 bis 3 bedeuten.

9. Das Verfahren nach Anspruch 7, wobei die Indolium- oder Azoliumverbindungen eine Struktur gemäß Formel XIXa und Formel XIXb haben, 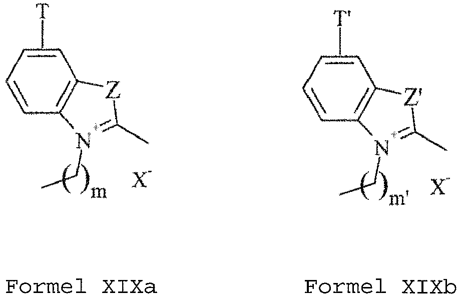 in denen
T, T', Z und Z' die gleiche Bedeutung wie in Formel XXII haben, m und m' unabhängig voneinander eine ganze Zahl von 0 bis 15 bedeuten,
X- die Verbindungen neutral macht.

10. Das Verfahren nach Anspruch 7, wobei die Indolium- oder Azoliumverbindungen gemäß den Formeln XIII und XIV identisch sind.

11. Eine lithografische Druckplattenvorstufe, enthaltend einen gemäß dem wie in den Ansprüchen 7 bis 10 definierten Verfahren erhaltenen IR-Farbstoff.

## Revendications

1. Composé selon la Formule I, 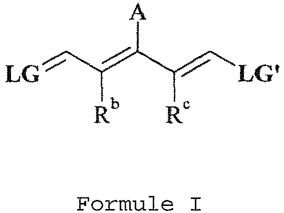 où
R^{b} et R^{c} représentent, indépendamment l'un de l'autre, un atome d'hydrogène ou un groupe alkyle éventuellement substitué ou les atomes nécessaires pour former une structure cyclique éventuellement substituée,
LG représente un précurseur de groupe partant choisi parmi la liste composée de: 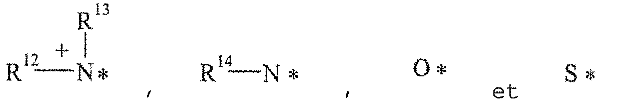
LG' représente un précurseur de groupe partant choisi parmi la liste composée de: 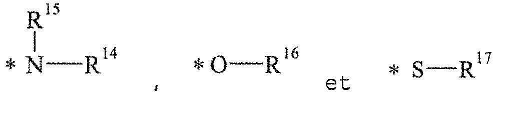 où
R¹², R¹³, R¹⁴, R¹⁵, R¹⁶ et R¹⁷ représentent, indépendamment l'un de l'autre, un atome d'hydrogène, un groupe alkyle éventuellement substitué ou un groupe (hétéro)aryle éventuellement substitué ou R¹² et R¹³ ou R¹⁴ et R¹⁵ représentent les atomes nécessaires pour former une structure cyclique,
* représente le site de liaison de LG et LG' dans la Formule I,
A est choisi parmi la liste composée de:
- NR¹-CO-R²
- NR¹-SO₂-R³
- NR⁴-SO-R⁵
- NR¹-PO-R⁶R⁷
où
R¹ représente un atome d'hydrogène, un groupe alkyle éventuellement substitué, un groupe -SO₃⁻, un groupe -COOR⁸ ou un groupe (hétéro)aryle éventuellement substitué ou R¹ et au moins l'un de R⁹, R¹⁰ et R¹¹ représentent conjointement les atomes nécessaires pour former une structure cyclique,
R² représente un groupe alkyle ou (hétéro)aryle éventuellement substitué, -OR⁹, -NR¹⁰R¹¹ ou CF₃,
R³ représente un groupe alkyle éventuellement substitué, un groupe (hétéro)aryle éventuellement substitué, -OR⁹, -NR¹⁰R¹¹ ou - CF₃,
R⁴ représente un atome d'hydrogène, un groupe alkyle éventuellement substitué ou un groupe (hétéro)aryle éventuellement substitué,
R⁵ représente un groupe alkyle éventuellement substitué ou un groupe (hétéro)aryle éventuellement substitué,
R⁶ et R⁷ représentent, indépendamment l'un de l'autre, un groupe alkyle éventuellement substitué, un groupe aryle éventuellement substitué ou -OR⁹,
R⁸ représente un groupe aryle éventuellement substitué ou un groupe alkyle éventuellement substitué,
R⁹ représente un groupe (hétéro)aryle éventuellement substitué ou un groupe alkyle éventuellement substitué,
R¹⁰ et R¹¹ représentent, indépendamment l'un de l'autre, un atome d'hydrogène, un groupe alkyle éventuellement substitué, un groupe (hétéro)aryle éventuellement substitué ou les atomes nécessaires pour former une structure cyclique.

2. Composé selon la revendication 1, **caractérisé en ce que** A est choisi parmi la liste composée de: 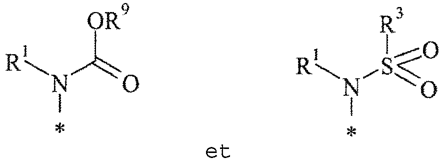 où
R¹ a la même signification que dans la revendication 1, R⁹ représente un groupe alkyle ramifié éventuellement substitué et
R³ représente -CF₃, un groupe aryle éventuellement substitué ou - NR¹⁰R¹¹, où R¹⁰ et R¹¹ ont la même signification que dans la Formule I.

3. Composé selon l'une quelconque des revendications précédentes, ayant une structure selon les Formules II, IIIa, IIIb et IV, 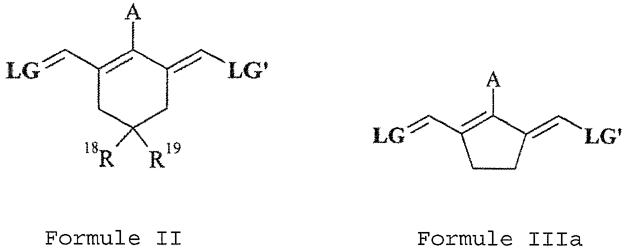 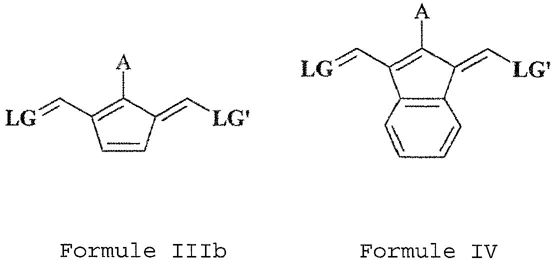 où
LG, LG' et A ont la même signification que dans la Formule I,
R¹⁸ et R¹⁹ représentent, indépendamment l'un de l'autre, un atome d'hydrogène, un groupe alkyle éventuellement substitué, un groupe (hétéro)aryle éventuellement substitué, -CN, -CO₂R²⁰ ou COR²¹, où R²⁰ représente un atome d'hydrogène ou un groupe alkyle et R²¹ représente un atome d'hydrogène, un groupe alkyle éventuellement substitué ou un groupe (hétéro)aryle éventuellement substitué.

4. Composé selon l'une quelconque des revendications précédentes, ayant une structure selon les Formules IIIa ou IIIB, 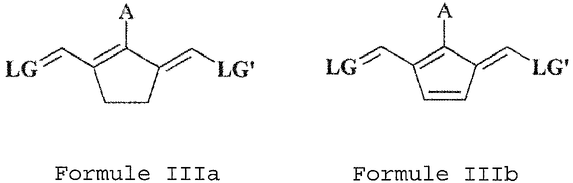 où
LG, LG' et A ont la même signification que dans la Formule I.

5. Composé selon l'une quelconque des revendications précédentes, ayant une structure selon la Formule V, 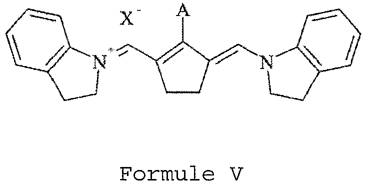 où
A a la même signification que dans la Formule I,
X⁻ neutralise le composé.

6. Composé selon l'une quelconque des revendications précédentes, ayant une structure selon la Formule XI, 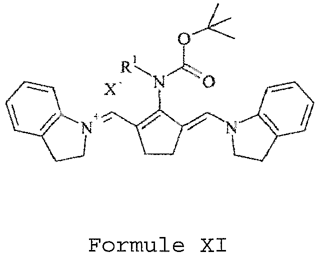 où
R¹ a la même signification que dans la Formule I et X⁻ neutralise le composé.

7. Procédé pour la préparation d'un colorant de cyanine selon la Formule XII 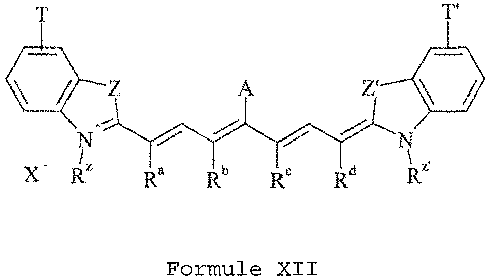 où
T et T' représentent, indépendamment l'un de l'autre, un ou plusieurs substituants ou un noyau condensé,
Z et Z' représentent, indépendamment l'un de l'autre, -O-, -S-,-CH=CH- ou -CR^{e}R^{f}- et où R^{e} et R^{f} représentent, indépendamment l'un de l'autre, un groupe alkyle ou aryle éventuellement substitué, R^{z} et R^{z'} représentent, indépendamment l'un de l'autre, un groupe alkyle éventuellement substitué,
R^{b} et R^{c} ont la même signification que dans la revendication 1,
R^{a} et R^{d} représentent, indépendamment l'un de l'autre, un atome d'hydrogène ou un groupe alkyle éventuellement substitué,
R^{z} et R^{a}, R^{d} et R^{z'} représentent les atomes nécessaires pour former un noyau pentagonal ou hexagonal éventuellement substitué,
X- neutralise le colorant,
comprenant l'étape consistant à faire réagir un composé intermédiaire tel que défini dans l'une quelconque des revendications 1 à 6 avec un composé d'indolium ou un composé d'azolium selon la Formule XIII et un composé d'indolium ou un composé d'azolium selon la Formule XIV, 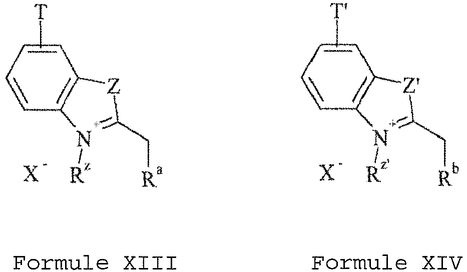 où
T, T', Z, Z', R^{z}, R^{z'}, R^{a}, R^{b} et X⁻ ont la même signification que dans la Formule XII.

8. Procédé selon la revendication 7, **caractérisé en ce que** les composés d'indolium ou d'azolium ont une structure selon la Formule XVIIIa et la Formule XVIIIb, 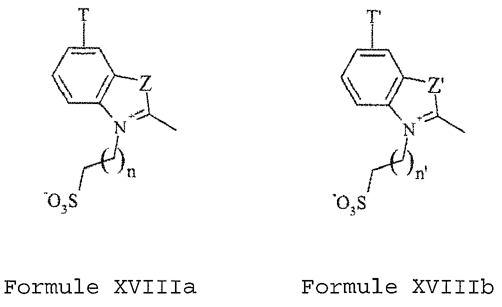 où
T, T', Z et Z' ont la même signification que dans la Formule XXII,
n et n' représentent, indépendamment l'un de l'autre, un nombre entier de 1 a 3.

9. Procédé selon la revendication 7, **caractérisé en ce que** les composés d'indolium ou d'azolium ont une structure selon la Formule XIXa et la Formule XIXb, 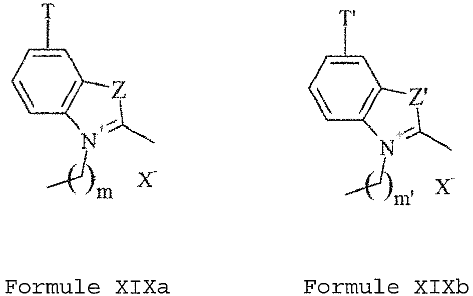 où
T, T', Z et Z' ont la même signification que dans la Formule XXII, m et m' représentent, indépendamment l'un de l'autre, un nombre entier de 0 à 15,
X⁻ neutralise les composés.

10. Procédé selon la revendication 7, **caractérisé en ce que** les composés d'indolium ou d'azolium selon les Formules XIII et XIV sont identiques.

11. Précurseur de plaque d'impression lithographique, contenant un colorant absorbant les rayons infrarouges obtenu selon le procédé tel que défini dans les revendications 7 à 10.
